(19) Europäisches Patentamt
European Patent Office
Office européen des brevets

(11) **EP 4 760 227 A1**

(12) **EUROPÄISCHE PATENTANMELDUNG**

(43) Veröffentlichungstag:
**17.06.2026   Patentblatt 2026/25**

(21) Anmeldenummer: **25222072.8**

(22) Anmeldetag: **10.12.2025**

(51) Internationale Patentklassifikation (IPC):
***G01M 11/06*** *(2006.01)*

(52) Gemeinsame Patentklassifikation (CPC):
**G01M 11/065**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **10.12.2024   DE 102024136962**
**10.12.2024   DE 102024136961**

(71) Anmelder: **FSD Fahrzeugsystemdaten GmbH**
**01307 Dresden (DE)**

(72) Erfinder: **RABE, Stephan**
**28759 Bremen (DE)**

(74) Vertreter: **Lippert Stachow Patentanwälte**
**Rechtsanwälte**
**Partnerschaft mbB**
**Königsbrücker Straße 124**
**01099 Dresden (DE)**

(54) **VERFAHREN UND VORRICHTUNG ZUR ÜBERPRÜFUNG DER EINSTELLUNG EINES FAHRZEUGSCHEINWERFERS**

(57)   Es wird ein Verfahren und eine Vorrichtung zur Überprüfung der Einstellung eines Fahrzeugscheinwerfers (10) beschrieben, wobei das Verfahren folgende Schritte umfasst: Erfassen eines Bildes (25) einer Projektion des Lichtkegels (9) des Fahrzeugscheinwerfers (11) auf eine Projektionsfläche (12); mittels des erfassten Bildes Ermitteln (26) der Position mindestens eines vorgegebenen, die Einstellung des Fahrzeugscheinwerfers (11) kennzeichnenden Merkmals des Lichtkegels (9) in dem Bild basierend auf einem Bestimmen eines Maximums eines senkrechten Abstandes (40, 46) einer auf vorgegebene Weise festgelegten Referenzgeraden (19, 39) zu einer Helligkeitsdatenkurve (1, 38); Ermitteln eines Ist-Zustandes der Einstellung des Fahrzeugscheinwerfers (11) durch Vergleichen der Position des mindestens einen kennzeichnenden Merkmals des Lichtkegels (9) mit einer vorgegebenen Referenzposition (27).

FIG 3

EP 4 760 227 A1

**Beschreibung**

Die vorliegende Erfindung betrifft ein Verfahren und eine Vorrichtung zur Überprüfung der Einstellung eines Fahrzeugscheinwerfers. Die Vorrichtung und das Verfahren können insbesondere die Bestimmung einer Hell-Dunkel-Grenze und/oder eines Knickpunkts betreffen oder umfassen, welche zur Überprüfung der Einstellung, Justage und Kalibrierung verwendet werden können. Die Erfindung betrifft zudem ein Verfahren und eine Vorrichtung zum Justieren und/oder Kalibrieren der Einstellung eines Fahrzeugscheinwerfers sowie ein computerimplementiertes Verfahren, ein Computerprogrammprodukt, einen computerlesbaren Datenträger und ein Datenträgersignal.

Bei der Überprüfung der Scheinwerfereinstellung, insbesondere von Fahrzeugen, ist die Bestimmung der sogenannten Hell-Dunkel-Grenze des von dem Scheinwerfer abgestrahlten Lichtkegels unabdingbar. Dabei sind in der Normung UN-ECE-R149 (UN-Regelung Nr. 149 - Einheitliche Bedingungen für die Genehmigung von Fahrbahnbeleuchtungseinrichtungen (Leuchten) und -systemen für Kraftfahrzeuge [2021/1720]) für die Homologation klare Methoden und Randbedingung beschrieben. Zunächst werden die Scheinwerfer im ausgebauten Zustand einzeln vermessen. Dazu erfolgt die Montage des Scheinwerfers auf einem Goniophotometer. Die händische Ausrichtung im Messsystem erzeugt eine gewisse Subjektivität im Messprozess. Anschließend folgt die vollständige Verdunklung des Raums mit einer zusätzlichen Abschottung von Streulicht durch eingebrachte Blenden. Die Vermessung der Leuchtstärke erfolgt entweder direkt durch ein Luxmeter oder indirekt durch die Aufnahme des von einem Projektionsschirm reflektierten Lichtbilds mittels einer Leuchtdichtekamera. Maßgeblich sind während der Homologation die photometrischen Werte an gewissen Messpunkten und Zonen. Diese sind aber durch den händischen Einrichtungsprozess nicht vom Betrachter unabhängig. Nur in einem Grenzfall, wenn die photometrischen Werte bei wiederholter Messung nicht der Norm entsprechen, wird die Beschaffenheit der Hell-Dunkel-Grenze überprüft. Die Hell-Dunkel-Grenze kann unter den genannten Messbedingungen mit der folgenden Gleichung ermittelt werden:

$$d^2 (\log E) / d\beta^2 = 0 \qquad (1)$$

Dabei kennzeichnen E die Beleuchtung des verwendeten Messschirms bzw. die erfasste Lichtintensität und $\beta$ die vertikale bzw. horizontale Position im Bild (siehe ECE-R149, S. 83 und 84).

Ausgehend von dieser Messung kann sowohl durch das sogenannte "Verfahren 0,2°D" als auch mit der sogenannten "Methode mit den drei Linien" ein Knickpunkt berechnet werden. Dieser muss laut Definition in einem vorgegebenen Bereich liegen. Die Methoden müssen je nach Scheinwerfer nicht das identische Ergebnis liefern. Dies führt zusätzlich zu einer Mehrdeutigkeit der Ergebnisse.

In der periodischen technischen Untersuchung, der sogenannten Hauptuntersuchung, muss die Überprüfung der Scheinwerfereinstellung in horizontaler und vertikaler Richtung stattfinden. Dazu befinden sich im Unterschied zur Homologation die Scheinwerfer im eingebauten Zustand. Mit dem jetzigen Stand der Technik können zur Überprüfung der Einstellung zwei Methoden angewandt werden. Diese erfordern, dass sich das Fahrzeug in Ruhe und im statischen Zustand auf einem definierten Untergrund befindet. Bei dem am weitverbreitetsten Verfahren, der Messung mit einem Scheinwerfereinstell- und Prüfgerät, wird nacheinander bei jedem Scheinwerfer ein Lichtsammelkasten manuell ausgerichtet. Auch hierbei muss das Fahrzeug auf einem definierten Untergrund stehen. Das vom Scheinwerfer emittierte Licht wird innerhalb dieses Lichtsammelkastens durch eine Fresnel-Linse gebrochen. Innerhalb des Lichtsammelkastens wird das Lichtbild auf einen im Lichtsammelkasten befindlichen Projektionsschirm projiziert. Durch die räumliche Geometrie des Lichtsammelkastens und die Brennweite der Linse wird eine Projektionsstrecke von 10m erreicht. Durch eine verbaute Kamera wird dann das Lichtbild erfasst und ausgewertet. Da aber ein Eintrag von Streu- und Umgebungslicht in den Lichtsammelkasten nicht ausgeschlossen werden kann, muss dieser Einfluss kompensiert werden. Dazu ist ein zusätzlicher Umgebungslichtsensor nötig. Die Bestimmung des Knickpunktes erfolgt dann nach dem von Herstellern festgelegten nicht öffentlichen Methoden. Die zweite Methode, die Einstellung mittels einer 10m Wand, ähnelt der Messmethode zum Scheinwerfereinstell- und Prüfgerät. Dabei wird das Fahrzeug auf definiertem Untergrund in exakt 10m Entfernung zu einem Projektionsschirm aufgestellt. Anschließend erfolgt eine Abdeckung einer Scheinwerferseite und die Vermessung der anderen. Die Lage der Hell-Dunkel-Grenze und des Knickpunkts erfolgt händisch durch einen Sachverständigen.

Verfahren zum Ausrichten eines Fahrzeugscheinwerfers sind beispielsweise in den Dokumenten EP 1 953 518 A2, EP 1 953 520 B1, EP 2 128 589 A1 und DE 10 2014 016 174 A1 beschrieben. In diesem Zusammenhang kann z. B. ein Scheinwerfereinstellkasten verwendet werden, wobei mittels eines Sensors die Hell-Dunkel-Grenze des Scheinwerferlichts erkannt werden kann. Ein Prüfverfahren zur Bewertung der Hell-Dunkel-Grenze wird z. B. in dem Dokument DE 10 2015 222 393 A1 beschrieben. In dem Dokument DE 10 2014 016 116 A1 ist eine Prüfvorrichtung und ein Verfahren zur Überprüfung einer lichttechnischen Einheit eines Fahrzeugs offenbart. In dem Dokument DE 10 2010 062 770 A1 wird ebenfalls eine Prüfvorrichtung zur Überprüfung einer lichttechnischen Einheit eines Fahrzeugs beschrieben.

Eine aktuelle Einschränkung im Stand der Technik besteht darin, dass die Überführung der in der Homologation ermittelten Lagebestimmung der Hell-Dunkel-Grenze in eine reale Umgebung nicht ohne Randbedingungen und zusätzliche Sensorik möglich ist. Dabei sind konkrete Schritte nötig, um eine korrekte Prüfung zu gewährleisten, wie z.B. Bestimmung und Kompensation des Umgebungslichts, Verdunklung und Begrenzung des in den Messort einfallenden Lichts. Die Scheinwerfer können nicht gleichzeitig und nur isoliert voneinander vermessen werden. Die aktuell zulässigen Methoden zur Überprüfung der Scheinwerfereinstellung mittels Scheinwerfereinstell- und Prüfgerät und 10m-Wand, sowie die Lagebestimmung während der Homologation sind nicht frei vom Einfluss des Anwenders und dadurch nur bedingt reproduzierbar.

In allen bisher bekannten Verfahren wird der Wendepunkt des logarithmischen Lichtintensitätsanstieg als Hell-Dunkel-Grenze definiert. Dies hat zur Folge, dass kein Umgebungslicht mitgemessen werden darf. Denn ein Hinzufügen von einem gleichmäßigem Umgebungslicht führt in einer linearen Betrachtungsweise zu einer Parallelverschiebung des Signals auf der Achse. Im logarithmischen Raum findet hingegen eine Verzerrung des Signals statt. Bei der Ableitung der durch das Umgebungslicht verzerrten Lichtintensitätsverteilung führt das zu einer signifikanten Verschiebung des Wendepunkts und damit zu einer Verschiebung der Hell-Dunkel-Grenze.

Vor diesem Hintergrund ist es Aufgabe der vorliegenden Erfindung ein vorteilhaftes Verfahren zur Überprüfung der Einstellung eines Fahrzeugscheinwerfers zur Verfügung zu stellen. Weitere Aufgaben bestehen darin, eine Vorrichtung zur Überprüfung der Einstellung eines Fahrzeugscheinwerfers, ein Verfahren und eine Vorrichtung zum Justieren und/oder Kalibrieren der Einstellung eines Fahrzeugscheinwerfers sowie ein computerimplementiertes Verfahren, ein Computerprogrammprodukt, einen computerlesbaren Datenträger und ein Datenträgersignal zur Verfügung zu stellen.

Die genannten Aufgaben werden durch die Gegenstände der unabhängigen Patentansprüche gelöst. Die abhängigen Ansprüche enthalten weitere vorteilhafte Ausgestaltungen der Erfindung.

Das erfindungsgemäße Verfahren zur Überprüfung der Einstellung, z. B. der Ausrichtung, eines Fahrzeugscheinwerfers, also eines Scheinwerfers eines Fahrzeugs oder eines Scheinwerfers für ein Fahrzeug, umfasst folgende Schritte: In einem ersten Schritt wird ein Bild einer Projektion des Lichtkegels des Fahrzeugscheinwerfers auf eine Projektionsfläche erfasst, z. B. mittels einer Kamera. Die Bilderfassung kann eine Steuerung der Kameras umfassen, beispielsweise um zu gewährleisten, dass die Helligkeit der erfassten Bilder vorgegebenen Parametern oder Anforderungen entspricht.

In einem zweiten Schritt wird mittels des erfassten Bildes die Position mindestens eines vorgegebenen, die Einstellung des Fahrzeugscheinwerfers kennzeichnenden oder charakterisierenden Merkmals des Lichtkegels ermittelt oder bestimmt. Es kann beispielsweise mittels der erfassten Bilddaten ein die Ausrichtung des Fahrzeugscheinwerfers kennzeichnendes oder charakterisierendes Merkmal, z. B. die Position einer Hell-Dunkel-Grenze und/oder eines Knickpunktes der Projektion des Lichtkegels in dem Bild, insbesondere in den Bilddaten, ermittelt oder bestimmt werden. Die erfolgt basierend auf einem Bestimmen oder Ermitteln eines Maximums eines senkrechten Abstandes (vorliegend auch Residuum genannt) einer auf vorgegebene Weise festgelegten oder ermittelten Referenzgeraden zu einer Helligkeitsdatenkurve, insbesondere einem vorgegebenen Bereich einer Helligkeitsdatenkurve oder einer Kurve, die einen Hell-Dunkel-Grenzen-Verlauf kennzeichnet. Unter einer Helligkeitsdatenkurve wird vorliegend eine Helligkeit-Bildposition-Kurve oder mit anderen Worten eine Kurve verstanden, welche die Helligkeit oder Lichtintensität als Funktion bzw. in Abhängigkeit von der Position im Bild, z. B. angegeben in Pixelposition oder Ortskoordinaten oder Winkelkoordinaten, abbildet. Der Hell-Dunkel-Grenzen-Verlauf ergibt sich mit anderen Worten aus den in der Bildebene oder Projektionsebene aneinandergereihten benachbarten Positionen der einzelnen Hell-Dunkel-Grenzen eines gesamten Scheinwerfers.

In einem dritten Schritt wird ein Ist-Zustand der Einstellung des Fahrzeugscheinwerfers durch Vergleichen der Position des mindestens einen kennzeichnenden Merkmals des Lichtkegels mit einer vorgegebenen Referenzposition ermittelt.

Es kann sich bei dem Fahrzeug um ein Kraftfahrzeug, ein Schienenfahrzeug, ein Flugzeug oder ein Schiff handeln. Bei dem Kraftfahrzeug kann es sich um einen Personenkraftwagen, einen Lastkraftwagen, einen Traktor oder eine Landmaschine, einen Bus, einen Kleinbus, ein Motorrad oder ein Moped handeln.

Das Verfahren kann computerimplementiert sein, d. h. mindestens ein Verfahrensschritt, bevorzugt mehrere oder alle Verfahrensschritte, können unter Verwendung eines Computerprogramms ausgeführt werden. Folglich umfasst ein solches computerimplementiertes Verfahren Befehle, die bei der Ausführung des Programms durch einen Computer diesen veranlassen, ein oben beschriebenes oder nachfolgend noch näher erläutertes erfindungsgemäßes Verfahren auszuführen.

Vorzugsweise wird als kennzeichnendes Merkmal eine Hell-Dunkel-Grenze und/oder mindestens ein Knickpunkt bestimmt. Das kennzeichnende Merkmal kann mit anderen Worten eine Hell-Dunkel-Grenze und/oder mindestens ein Knickpunkt sein.

Vorteilhafterweise werden Helligkeitsdatenkurven verwendet, welche bezüglich der Position, z. B. dem Ort und/oder der Richtung im Bild, und der Helligkeit linear skaliert sind.

Die vorliegende Erfindung hat den Vorteil, dass mit ihr kennzeichnende Merkmale des Lichtkegels, wie insbesondere die Lage der Hell-Dunkel-Grenze sowie des Knickpunktes, von beiden Scheinwerfern gleichzeitig ohne zusätzliche Referenzsensorik und bei Umgebungslicht bestimmt werden können. Die Erfindung ermöglicht es, reproduzierbare und vergleichbare Ergebnisse zu messen, die nicht durch den Anwender oder die Umgebung beeinflusst werden, also anwenderunabhängige Ergebnisse liefern. Zudem sind die Messergebnisse mit den Ergebnissen vergleichbar, die unter optimalen Bedingungen während der Homologation unter dessen Vorschriften gemessen werden. Mittels der vorliegenden Erfindung ist explizit ein Umgebungslichteintrag, die Aufnahme beider Scheinwerferseiten gleichzeitig und eine Abweichung der vorgeschrieben Messdistanz von 10m möglich. Das Ergebnis ist vergleichbar mit dem Ergebnis und den Anforderungen an die Messgenauigkeit in der Homologation nach UN-ECE-R149.

In einer vorteilhaften Variante des erfindungsgemäßen Verfahrens wird die zweite Ableitung mindestens einer Helligkeitsdatenkurve gebildet und eine Hell-Dunkel-Grenze in der Helligkeitsdatenkurve mittels eines globalen Maximums der zweiten Ableitung bestimmt, oder mit anderen Worten mittels eines positiven Extrempunktes mit dem maximalen Funktionswert, also dem stärksten oder höchsten Punkt oder der größten Amplitude. Optional kann auch die dritte Ableitung gebildet werden, z. B. zur Verifizierung der Extrempunkte in der zweiten Ableitung. Vorzugsweise wird die Hell-Dunkel-Grenze in einer Mehrzahl an Helligkeitsdatenkurven bestimmt, z. B. in parallel zueinander verlaufenden Helligkeitsdatenkurven, beispielsweise horizontal oder vertikal im Bild parallel zueinander verlaufenden Helligkeitsdatenkurven.

In einer weiteren Variante kann eine erste Hell-Dunkel-Grenze an der Position des globalen Maximums der zweiten Ableitung ermittelt werden und mindestens eine weitere Hell-Dunkel-Grenze an der Position eines lokalen Maximums der zweiten Ableitung ermittelt werden. Dabei kann das lokale Maximum mindestens ein vorgegebenes Merkmal, z. B. eine prozentuale Mindestamplitude oder Mindesthöhe, in Bezug auf das globale Maximum aufweisen. Beispielsweise kann gefordert werden, dass das lokale Maximum mindestens 30 Prozent der Höhe oder Amplitude des globalen Maximums aufweisen muss, um als weitere Hell-Dunkel-Grenze qualifiziert zu werden. Die beschriebene Variante ermöglicht es, mehrere Hell-Dunkel-Grenzen in einem Bild zu identifizieren, wodurch z. B. beide Frontscheinwerfer eines Fahrzeugs gleichzeitig überprüft werden können. Dies spart personelle, zeitliche und damit finanzielle Ressourcen.

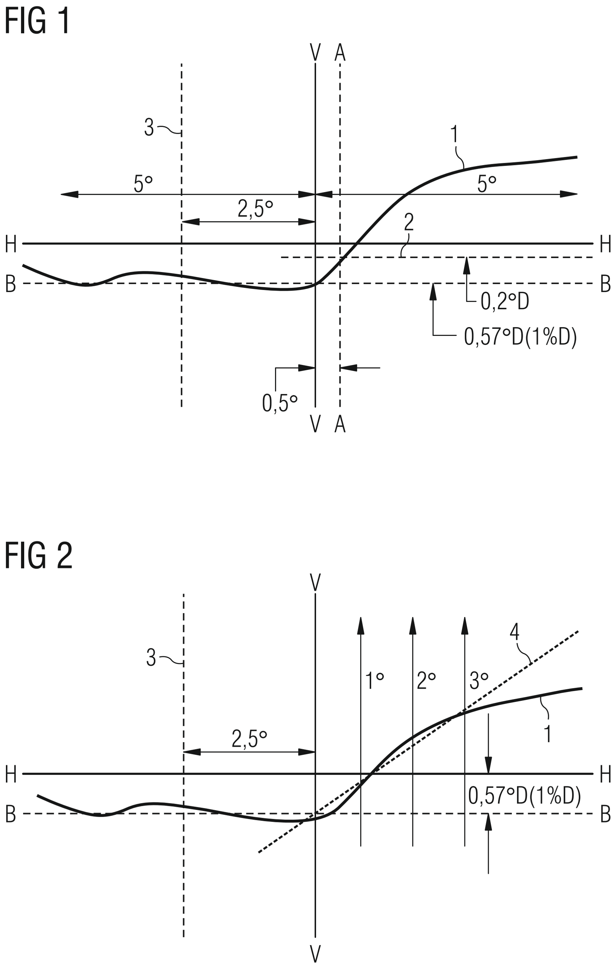

Es kann ein Knickpunkt basierend auf einem Verlauf einer Hell-Dunkel-Grenze in einem HH-VV-Diagramm oder HH-VV-Datensatz ermittelt werden. Ein HH-VV-Diagramm wird z. B. in der Norm gemäß UN-ECE-R149 verwendet und unten anhand der Figuren 1 und 2 erläutert. Zur Bestimmung des Knickpunktes kann in einem ersten Schritt in einem vorgegebenen Bereich zwischen den Koordinaten 0 Grad links (0°L) und 5 Grad links (5°L), vorzugsweise zwischen 0,5°L und 4,5°L, der HH-Achse des Verlaufs der Hell-Dunkel-Grenze mittels einer ersten Gerade approximiert werden, beispielsweise durch Fitten oder Mittelwertbildung. Die erste Gerade kann z. B. als parallel zur HH-Achse verlaufend angenommen werden und bei einem ermittelten Mittelwert der HDG-Positionen in VV-Richtung einen Schnittpunkt mit der VV-Achse aufweisen. Es können auch eine vorgegebene Anzahl benachbarter HDG-Positionswerte in VV-Richtung gemittelt werden, also mit anderen Worten blockweise gemittelt werden.

In einem zweiten Schritt zur Bestimmung des Knickpunktes können mindestens drei Punkte, vorzugsweise in Richtung der VV-Achse äquidistante Punkte, des Verlaufs der Hell-Dunkel-Grenze ausgewählt werden, wovon ein erster, z. B. unterer, Punkt eine Koordinate von 0,2 Grad unten, also einen Wert von 0,2°D, in VV-Richtung aufweist. Es handelt sich bei dem ersten Punkt mit anderen Worten um einen Punkt, an dem der HDG-Verlauf (HDG - Hell-Dunkel-Grenze) eine parallel zur HH-Achse oder parallel zu der ersten Gerade verlaufende Gerade bei 0,2 Grad unten schneidet. Ein zweiter, z. B. oberer, Punkt kann eine Koordinate von 1,0 Grad oben, also einen Wert von 1,0°U, aufweisen oder eine Koordinate von 0,1 Grad unterhalb eines Schulterpunktes des Verlaufs der Hell-Dunkel-Grenze in VV-Richtung aufweisen. Der zweite Punkt kann mit anderen Worten ein Punkt sein, an dem der HDG-Verlauf eine parallel zur HH-Achse verlaufende Gerade entlang 1,0 Grad oben oder eine parallel zur HH-Achse verlaufende Gerade entlang 0,1 Grad unterhalb eines Schulterpunktes des HDG-Verlaufs schneidet. Ein dritter Punkt weist eine Koordinate in VV-Richtung auf, welche zwischen den Koordinaten des ersten und des zweiten Punktes in VV-Richtung liegt. Ein dritter Punkt kann also zwischen dem ersten und dem zweiten Punkt auf dem Verlauf der Hell-Dunkel-Grenze ausgewählt werden. Die mindestens drei, vorzugsweise äquidistanten, Punkte können durch Abtasten der Helligkeitsdatenverläufe in dem erfassten Bild in HH-Richtung ermittelt werden. In einer konkreten Anwendung kann zur besseren Tolerierung der Fahrzeugaufbaubewegung die Parallelität zum approximierten horizontalen Teil, also zu der ersten Gerade, implementiert sein.

In einem dritten Schritt zur Bestimmung des Knickpunktes können die mindestens drei ausgewählten Punkte mittels einer zweiten Gerade approximiert werden. Es können auch Bereiche zwischen dem ersten und zweiten Punkt approximiert werden, es kann also eine Approximation unter Einbeziehung zusätzlicher, weiterer Punkte erfolgen. In einem vierten Schritt kann der Knickpunkt als Schnittpunkt der ersten Gerade mit der zweiten Gerade ermittelt oder festgelegt werden. Dabei muss der so ermittelte Knickpunkt kein Punkt auf dem Verlauf der Hell-Dunkel-Grenze, also auf der HDG-Kurve, sein.

In einer vorteilhaften weiteren Variante kann im Rahmen der Bestimmung des Knickpunktes zunächst zur Bestimmung der Lage der VV-Achse der Knickpunkt vorausbestimmt oder prädiktiert werden und der Knickpunkt dann basierend auf dem vorausbestimmten oder prädiktierten Knickpunkt bestimmt werden. Zur Bestimmung des prädiktierten Knickpunktes kann eine Hilfsgerade, z. B. auf vorgegebene Weise, zu einem bestimmten Verlauf einer Hell-Dunkel-Grenze konstruiert werden. Der Punkt der Hell-Dunkel-Grenze bzw. des entsprechenden HDG-Verlaufs, welcher den maximalen Abstand senkrecht zu der Hilfsgerade von der Hilfsgerade (maximales Residuum) aufweist, kann ermittelt und als prädiktierter Knickpunkt festgelegt werden. Zur Konstruktion der Hilfsgerade kann der Schulterpunkt des HDG-Verlaufs bestimmt, z. B. berechnet, werden und als Punkt auf der Hilfsgerade bzw. als Skalierungspunkt verwendet werden.

Die Eingangsgrößen oder Eingangsdaten zur Bestimmung des Verlaufs der Hell-Dunkel-Grenze können mit mindestens einem optischen Sensor und/oder mindestens einem Lichtmessgerät erfasst werden, z. B. mittels eines Luxmeters, also in Form eines abgetasteten Bildes, und/oder mittels einer Leuchtdichtekamera, also in Form eines Leuchtdichtebildes, und/oder einer Monochromkamera, also in Form eines Graustufenbildes, und/oder einer chromatischen Kamera, z. B. also in Form einer berechneten Y-Helligkeit eines XYZ-Farbraums nach CIE1931.

Weiterhin können die Bilddaten des erfassten Bildes gefiltert werden. Eine Filterung der Bilddaten kann unter Verwendung einer automatisierten Frequenzganganalyse, die auf der diskreten Fourier-Transformation (FFT) der Bildspalten basiert, oder alternativ von der Anwendung eines Chebyshev-Typ-II-Tiefpassfilters erfolgen. Dadurch kann ein Hochfrequenzrauschen in Bilddaten effizient zu reduziert werden, wobei die Filterparameter adaptiv an die spektralen Eigenschaften des Eingangsbildes angepasst werden können.

In einer weiteren Option kann mindestens eine Ableitung einer Helligkeitsdatenkurve numerisch bestimmt werden oder analytisch mittels einer polynomialen Kurvenanpassung (polynomial fitting oder Polynom-Fit) der Helligkeitsdaten bestimmt werden.

Ein im Rahmen der Bestimmung einer Hell-Dunkel-Grenze in einer Helligkeitsdatenkurve ausschließlich zu berücksichtigender Bereich der Helligkeitsdatenkurve kann mittels einer Hilfsgerade und eines Maximums eines Residuums bzw. senkrechten Abstandes der Hilfsgerade von der Helligkeitsdatenkurve iterativ bestimmt werden. Dabei kann eine Ausgangshilfsgerade so festgelegt werden, dass sie durch ein Maximum der Helligkeitsdatenkurve, z. B. durch ein globales Maximum oder bei mehreren HDG ein lokales Maximum, und durch vorgegebene gemittelte geringste oder letzte Helligkeitswerte der Helligkeitsdatenkurve verläuft. Vorzugsweise ist im Voraus definiert oder festgelegt, welche Werte und vielviele Werte hierbei gemittelt werden.

Zusätzlich oder alternativ dazu kann ein im Rahmen der Bestimmung eines Knickpunktes und/oder eines prädiktierten Knickpunktes in einer Kurve einer Hell-Dunkel-Grenze ausschließlich zu berücksichtigender Bereich der Kurve der Hell-Dunkel-Grenze mittels einer Hilfsgerade und eines Maximums eines Residuums / bzw. senkrechten Abstandes der Hilfsgerade von der Kurve der Hell-Dunkel-Grenze senkrecht zu der Hilfsgerade von der Hilfsgerade iterativ bestimmt werden. Dabei kann im Ergebnis eine Hilfsgerade so festgelegt werden, dass sie durch einen Schulterpunkt der HDG-Kurve und einen Datenpunkt mit einer Koordinate zwischen 3°L und 5°L, vorzugsweise zwischen 4°L und 4,5°L eines HH-VV-Diagramms verläuft.

Durch die zuvor beschriebenen Varianten zur Eingrenzung des zu berücksichtigenden Bereichs der Helligkeitsdatenkurve kann die Genauigkeit der Bestimmung der Hell-Dunkel-Grenze und/oder des Knickpunktes verbessert werden, indem Effekte an den Bildrändern eliminiert werden.

In einer dynamischen Variante des erfindungsgemäßen Verfahrens wird das Verfahren zumindest teilweise während einer Bewegung eines den Fahrzeugscheinwerfer umfassenden Fahrzeugs in Richtung der Projektionsfläche durchgeführt. Dabei kann die Pose des Fahrzeugs zum Zeitpunkt der Bilderfassung ermittelt werden. Die jeweils aktuelle Pose kann gemessen werden, z. B. mittels einer IMU (inertial measurement unit), also Verwendung einer Kombination mehrerer Inertialsensoren, wie z. B. Beschleunigungssensoren und Drehratensensoren. Unter einer Pose wird vorliegend die Kombination von Position und Orientierung im dreidimensionalen Raum verstanden. Die beschriebene dynamische Variante hat den Vorteil, dass die dynamischen Einflüsse des Fahrzeugaufbaus auf die Ausrichtung des abgestrahlten Lichtkegels der Scheinwerfer berücksichtigt werden können. Zudem liegt ein wesentlicher Vorteil, darin, dass sich der Einfluss der Bodenbeschaffenheit herausrechnen lässt. Als Referenz für die Scheinwerfereinstellung/Justage können zur Karosserie symmetrische Punkte und/oder die geometrische Fahrachse verwendet werden.

Das erfindungsgemäße Verfahren zum Justieren und/oder Kalibrieren der Einstellung, z. B. der Ausrichtung, eines Fahrzeugscheinwerfers umfasst folgende Schritte: Ermitteln eines Ist-Zustandes der Einstellung des Fahrzeugscheinwerfers mittels eines zuvor beschriebenen erfindungsgemäßen Verfahrens zur Überprüfung der Einstellung eines Fahrzeugscheinwerfers, und basierend auf dem ermittelten Ist-Zustand Justieren und/oder Kalibrieren der Einstellung, z. B. der Ausrichtung, des Fahrzeugscheinwerfers in einen vorgegebenen Soll-Zustand. Das erfindungsgemäße Verfahren zum Justieren und/oder Kalibrieren der Einstellung, eines Fahrzeugscheinwerfers hat die gleichen Merkmale und Vorteile, wie das erfindungsgemäße Verfahren zur Überprüfung der Einstellung eines Fahrzeugscheinwerfers.

Ein solches Verfahren kann ebenfalls computerimplementiert sein.

Die erfindungsgemäße Vorrichtung zur Überprüfung der Einstellung und/oder zum Justieren und/oder Kalibrieren der Einstellung eines Fahrzeugscheinwerfers umfasst Mittel zur Ausführung eines Verfahrens nach einem der vorstehenden Ansprüche. Die erfindungsgemäße Vorrichtung hat die im Zusammenhang mit den erfindungsgemäßen Verfahren bereits beschriebenen Vorteile. In einer bevorzugten Ausgestaltung kann das Ergebnis eines Vergleichs des Ist-Zustandes oder IstWertes der Einstellung des Fahrzeugscheinwerfers mit einem Soll-Wert oder einer vorgegebenen Referenzposition einem Nutzer angezeigt werden. Hierbei können die Ergebnisse visuell angezeigt werden, z. B. mittels eines Displays.

Das erfindungsgemäße Computerprogrammprodukt umfasst Befehle, die bei der Ausführung des Programms durch einen Computer diesen veranlassen, ein oben beschriebenes erfindungsgemäßes Verfahren auszuführen. Auf dem erfindungsgemäßen computerlesbaren Datenträger ist das erfindungsgemäße Computerprogrammprodukt gespeichert. Das erfindungsgemäße Datenträgersignal überträgt das erfindungsgemäße Computerprogrammprodukt. Das erfindungsgemäße Computerprogrammprodukt, der erfindungsgemäße computerlesbare Datenträger und das erfindungsgemäße Datenträgersignal haben die oben bereits genannten Merkmale und Vorteile.

Die Erfindung wird im Folgenden anhand von Ausführungsbeispielen unter Bezugnahme auf die beigefügten Figuren näher erläutert. Obwohl die Erfindung im Detail durch die bevorzugten Ausführungsbeispiele näher illustriert und beschrieben wird, so ist die Erfindung nicht durch die offenbarten Beispiele eingeschränkt und andere Variationen können vom Fachmann hieraus abgeleitet werden, ohne den Schutzumfang der Erfindung zu verlassen.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente allein verwendet werden kann, oder es kann jede Kombination von zwei oder mehr der aufgeführten Elemente verwendet werden. Wird beispielsweise eine Aufzählung der Schritte oder Komponenten A, B und/oder C beschrieben kann A allein; B allein; C allein; A und B in Kombination; A und C in Kombination; B und C in Kombination; oder A, B, und C in Kombination durchgeführt werden bzw. enthalten sein.

Fig. 1     zeigt schematisch ein HH-VV-Diagramm zur Veranschaulichung der Methode 0,2°D zur Scheinwerfereinstellung.

Fig. 2     zeigt schematisch ein HH-VV-Diagramm zur Veranschaulichung der Methode mit den drei Linien zur Scheinwerfereinstellung.

Fig. 3     zeigt schematisch eine Anordnung zur Überprüfung der Einstellung eines Fahrzeugscheinwerfers.

Fig. 4     zeigt schematisch die Struktur eines erfindungsgemäßen Verfahrens in Form eines Blockdiagramms.

Fig. 5     zeigt schematisch ein erfindungsgemäßes Verfahren in Form eines Flussdiagramms.

Fig. 6     zeigt schematisch Helligkeitsdiagramme und deren Auswertung zur Bestimmung einer Hell-Dunkel-Grenze in Form eines Diagramms.

Fig. 7     zeigt schematisch ein erfindungsgemäßes Verfahren zur Bestimmung des Knickpunktes anhand eines HH-VV-Diagramms.

Fig. 8     zeigt schematisch eine Falschfarbendarstellung eines Scheinwerferlichtbildes.

Fig. 9     zeigt schematisch eine normierte Helligkeitsdatenkurve mit einer Hilfsgeraden.

Fig. 10     zeigt schematisch eine Kurve, die den senkrechten Abstand der Datenpunkte in der in Fig. 9 gezeigten Helligkeitsdatenkurve zu der Hilfsgeraden abbildet.

Fig. 11     zeigt schematisch die Helligkeitsdatenkurve der Fig. 9, welche in einem Teilbereich durch ein Polynom approximiert ist.

Fig. 12     zeigt schematisch die 2. Ableitung des in Fig. 11 gezeigten Polynoms.

Fig. 13     zeigt schematisch die 3. Ableitung des in Fig. 11 gezeigten Polynoms.

Fig. 14     zeigt schematisch die in der Fig. 8 gezeigte Falschfarbendarstellung eines Scheinwerferlichtbildes mit zwei erfindungsgemäß ermittelten Hell-Dunkel-Grenzen.

Fig. 15     zeigt schematisch die Konstruktion einer Hilfsgeraden auf einer Hell-Dunkel-Grenze in einem HH-VV-Diagramm.

Fig. 16     zeigt schematisch die Bestimmung eines prädiktierten Knickpunktes und einer oberen Stützstelle auf einer Hell-Dunkel-Grenze in einem HH-VV-Diagramm.

Fig. 17     zeigt schematisch eine Aktualisierung des in Fig. 16 gezeigten prädiktierten Knickpunktes in einem HH-VV-Diagramm.

Fig. 18  zeigt schematisch eine Skalierung der Abtastung eines ansteigenden Teils der Hell-Dunkel-Grenze in einem HH-VV-Diagramm.

Fig. 19  zeigt schematisch eine erfindungsgemäße Vorrichtung zur Überprüfung der Einstellung eines Fahrzeugscheinwerfers.

Fig. 20  zeigt schematisch eine Anordnung zur dynamischen Überprüfung der Einstellung eines Fahrzeugscheinwerfers.

Im Folgenden werden zunächst anhand der Figuren 1 bis 3 die bisher bekannten Vorgehensweisen zur Überprüfung der Einstellung eines Fahrzeugscheinwerfers erläutert. Hierbei wird üblicherweise ein HH-VV-Diagramm als Referenz benutzt, wobei eine Hell-Dunkel-Grenze in Bezug auf ein durch die horizontale Achse HH und die vertikale Achse VV gebildetes Koordinatensystem beurteilt wird. Dabei werden die Koordinaten rechts der VV-Achse in ansteigenden Winkeln und dem Buchstaben R für rechts (right) und die Koordinaten links der VV-Achse in ansteigenden Winkeln und dem Buchstaben L für links (left) angegeben. In analoger Weise werden die Koordinaten oberhalb der HH-Achse in ansteigenden Winkeln und dem Buchstaben U für oben (up) und die Koordinaten unterhalb der HH-Achse in ansteigenden Winkeln und dem Buchstaben D für unten (down) angegeben.

Die Figur 1 zeigt schematisch ein HH-VV-Diagramm zur Veranschaulichung der Methode 0,2°D zur Einstellung eines Scheinwerfers anhand einer Hell-Dunkel-Grenze 1. Ein horizontaler Scan der Hell-Dunkel-Grenze oder der erfassten Helligkeitsdaten erfolgt entlang der Linie 2. Ein vertikaler Scan der Hell-Dunkel-Grenze oder der erfassten Helligkeitsdaten erfolgt entlang der Linie 3. Gemäß der oben genannten Norm erfolgt die horizontale Einstellung des Scheinwerfers für Rechtsverkehr, indem der ansteigende Teil der Hell-Dunkel-Grenze so zu verschieben ist, dass über der Linie 0,2°D der ansteigende Teil (Schulter) nach links nicht über die Linie A hinausgeht, auf der Linie 0,2°D oder darunter der ansteigende Teil (Schulter) die Linie A schneidet, und der Knick (Ellenbogen) sich im Wesentlichen innerhalb von +/-0,5° rechts oder links der Linie V-V befindet. In der Norm ist lediglich der Bereich des Knicks bzw. der Position des Knickpunktes angegeben. Er ist jedoch nicht weiter definiert. Ausgehend von einem Punkt unter der Linie B wird der horizontale Teil der Hell-Dunkel-Grenze bei 2,5° von der VV-Linie vertikal abgetastet. Der mit der oben angegebenen Formel (1) bestimmte Wendepunkt muss auf der Linie B liegen, die sich 1% unter der Linie HH befindet. Anschließend wird eine einzige horizontale Linie bei 0,2°D zwischen 5°L und 5°R abgetastet, wobei der auf dieser Linie bestimmte Wendepunkt auf der Linie A liegen muss.

Die Figur 2 zeigt schematisch ein HH-VV-Diagramm zur Veranschaulichung der Methode mit den drei Linien zur Scheinwerfereinstellung. Gemäß der oben genannten Norm werden nach der zuvor beschriebenen vertikalen Einstellung des Scheinwerfers drei vertikale Linien zwischen 2°D und 2°U bei 1°R, 2°R und 3°R abgetastet. Anhand der auf den der Linien bestimmten Wendepunkte wird eine Gerade 4 konstruiert. Der Schnittpunkt dieser Gerade 4 mit der Linie B, die bei der vertikalen Einstellung bestimmt worden ist, muss auf der Linie V liegen.

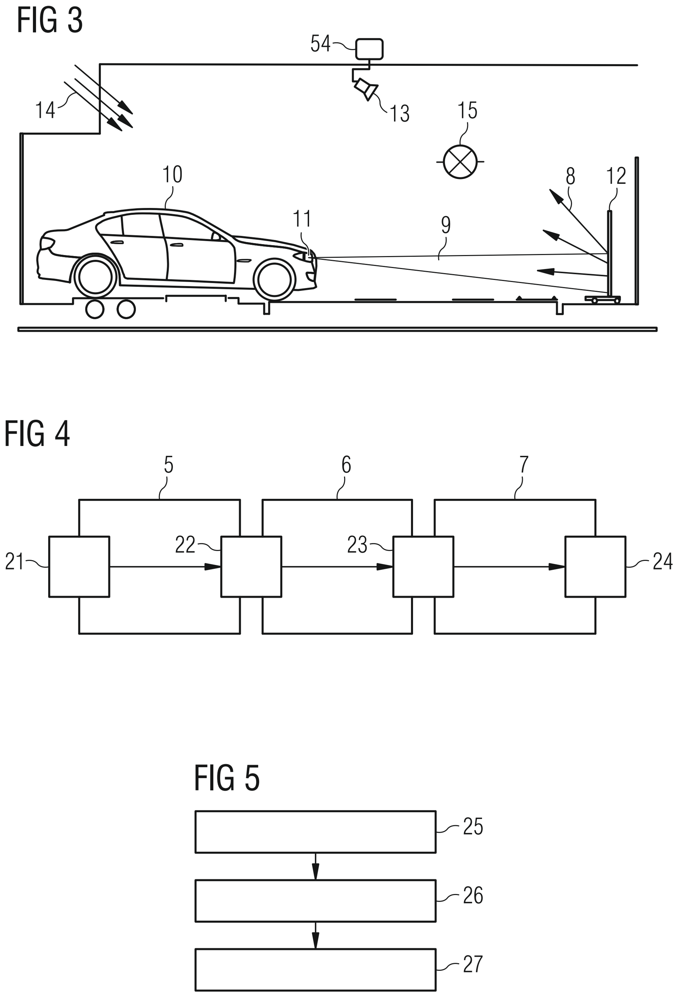

Die Figur 3 zeigt schematisch eine Anordnung oder mit anderen Worten den Aufbau einer Messsituation zur Überprüfung der Einstellung eines Fahrzeugscheinwerfers 11. Dargestellt ist ein Personenkraftwagen 10, welcher vor einem Projektionsschirm 12 oder allgemein vor einer Projektionsfläche positioniert ist. Das Lichtbild des von dem Fahrzeugscheinwerfer 11 abgestrahlten Lichtkegels 9 trifft auf die ausreichend lambert-reflektierende, also gemäß dem Lambertschen Gesetz reflektierende Oberfläche des Schirms 12 und wird in den Raum zurückgeworfen. Dies ist durch Pfeile 8 gekennzeichnet. Eine im Raum positionierte und auf die entsprechende Perspektive und Position kalibrierte Kamera 13 erfasst und digitalisiert das einfallende Lichtbild. Eine Lampe 15 und/oder das indirekt reflektierte Sonnenlicht 14, bringt ein unbekanntes Maß an Raumlicht bzw. Umgebungslicht in den Messaufbau. Es muss gewährleistet sein, dass sich kein direktes Sonnenlicht 14 auf den Schirm 12 abbildet und das einfallende Umgebungslicht nicht heller ist als das projizierte Scheinwerferlicht 9. Es muss im Ergebnis ein Mindestkontrast gewährleistet sein. Die Kamera 13 ist an einen Computer 54 angeschlossen und wird von diesem gesteuert.

Die Figur 4 zeigt schematisch die Struktur eines erfindungsgemäßen Verfahrens in Form eines Blockdiagramms. Die Überführung der Szenerie von einem Objektraum 21 in einen Bildraum 22 erfolgt mittels der Kamera 13. Die hierzu vorzunehmende Bildaufnahme mit geeigneter Belichtungsregelung ist durch den Block 5 dargestellt. Die Kamera 13 kann monochrom oder mit einem chromatisch auflösenden Bildsensor ausgestattet sein. Ist der Bildsensor monochrom, muss eine Bildhelligkeit aus einer Kombination von Belichtungszeit, Blende, und Bild-Gain (Verstärkung des Signals des Kamerasensors, um die Helligkeit des Bildes zu erhöhen) so eingestellt sein, dass der hellste Punkt im Bild 90% der Sättigungsgrenze der Fotodioden entspricht. Bei chromatisch auflösenden Bildsensoren muss zunächst eine Umwandlung vom RGB-Farbraum in den XYZ-Farbraum nach CIE1931 erfolgen. Die Y-Achse des Farbraums repräsentiert die Helligkeit im Bild. Auch hier müssen Belichtungszeit, Blende, und Bild-Gain so eingestellt sein, dass der Y-Farbraum zu 90% gesättigt ist. Eine Abweichung von den 90% ist möglich, hat aber zwei Einflüsse. Bei einer Unterschreitung sinkt der Bildkontrast und die folgenden Auswertungen sind zwar möglich, aber bedürfen einer genaueren Filterparametrierung. Eine Überschreitung birgt die Gefahr, dass das Scheinwerferlichtbild nicht mehr im linear arbeitenden Bereich des Bildsensors liegt.

Die anschließende Bildbearbeitung und Bildverarbeitung oder Vorverarbeitung in Block 6 umfasst z. B. eine perspektivische Entzerrung und/oder dreidimensionale Drehung und/oder Zuschneiden eines Ausschnitts und/oder eine Herausrechnung der Objektivparameter nach bekannten Regeln der Technik. Anschließend erfolgt die Merkmalsextraktion aus den Bilddaten, wodurch der Bildraum 22 in einen Merkmalsraum 23 überführt wird. In diesem Zusammenhang kann eine Bestimmung der Hell-Dunkel-Grenze erfolgen. Chromatische Bilder werden dabei zur Weiterverarbeitung, wie bei der Helligkeitsregelung, in den XYZ-Raum nach CIE-1931 umgewandelt. Der Farbraum der Kamera ist linear RGB und der Referenzweißpunkt ist D65. Ein Weißabgleich muss zuvor erfolgen.

Anschließend kann basierend auf mindestens einem in Block 23 ermittelten Merkmal, z. B. der ermittelten Hell-Dunkel-Grenze, in Block 7 eine Auswertung in Bezug auf die aktuelle Einstellung des Scheinwerfers erfolgen, z. B. Ermitteln einer Lage der Hell-Dunkel-Grenze und/oder eines Knickpunktes in Bezug auf ein Referenzkoordinatensystem, wie beispielsweise ein HH-VV-Diagramm. Der Block 24 kennzeichnet einen Ergebnisraum oder eine Ausgabe eines ermittelten Ergebnisses bezüglich der Einstellung des Scheinwerfers.

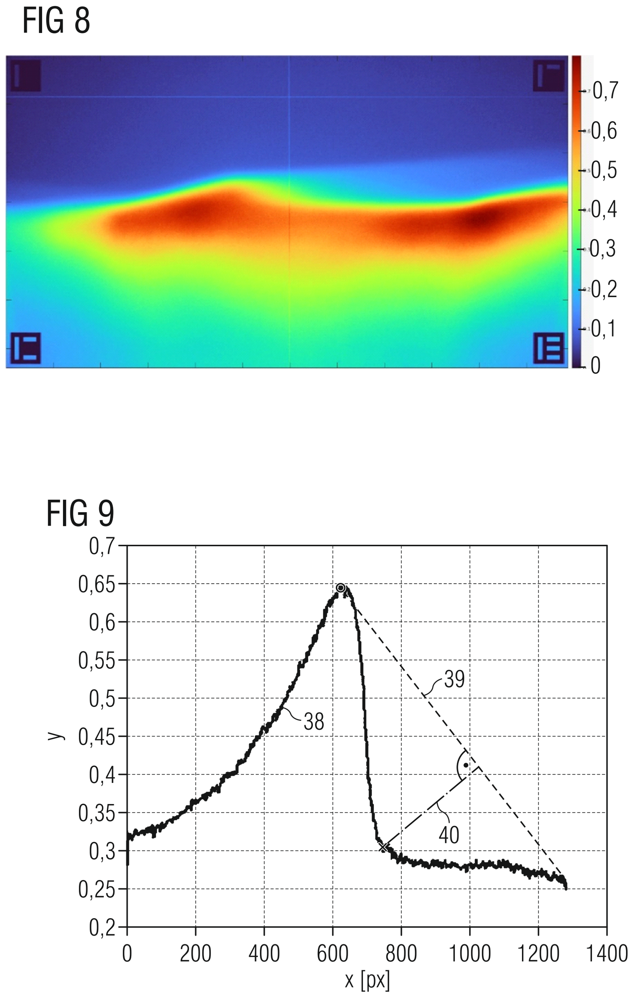

Die Figur 5 zeigt schematisch ein erfindungsgemäßes Verfahren in Form eines Flussdiagramms. In Schritt 25 erfolgt ein Erfassen eines Bildes einer Projektion des Lichtkegels 9 des Fahrzeugscheinwerfers 11 auf eine Projektionsfläche 12. Anschließend wird in Schritt 26 mittels des erfassten Bildes die Position mindestens eines vorgegebenen, die Einstellung des Fahrzeugscheinwerfers 11 kennzeichnenden Merkmals des Lichtkegels 9 in dem Bild ermittelt. Dies erfolgt basierend auf einem Bestimmen eines Maximums eines senkrechten Abstandes einer auf vorgegebene Weise festgelegten Referenzgeraden zu einer Helligkeitsdatenkurve (siehe hierzu u. a. die Figuren 9, 15 bis 17). In Schritt 27 erfolgt ein Ermitteln eines Ist-Zustandes der Einstellung des Fahrzeugscheinwerfers 11 durch Vergleichen der Position des mindestens einen kennzeichnenden Merkmals des Lichtkegels 9 mit einer vorgegebenen Referenzposition.

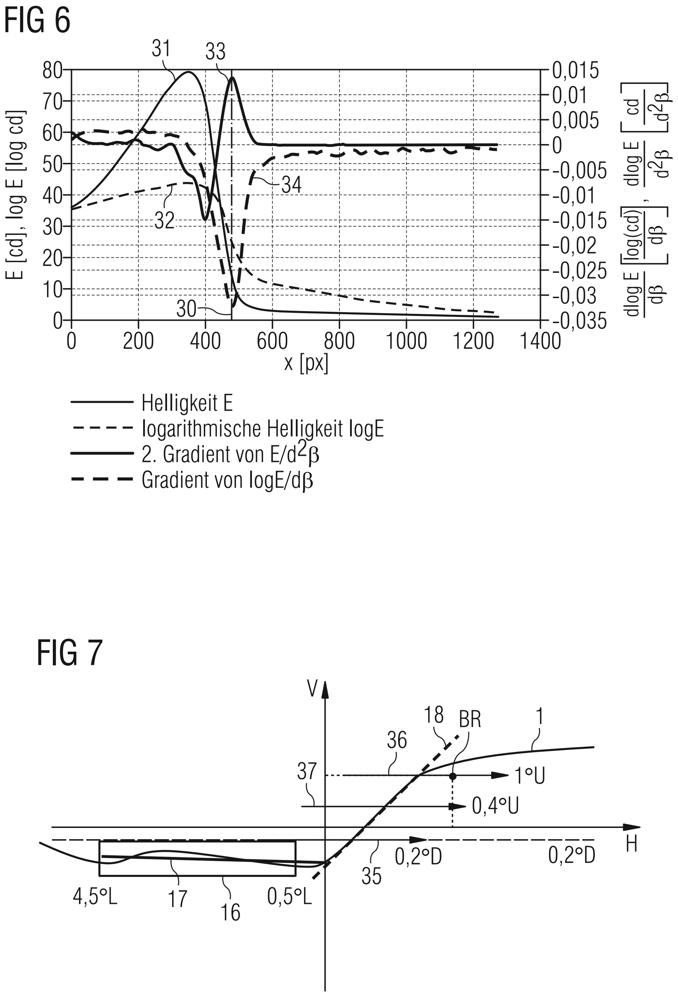

Die Figur 6 zeigt schematisch Helligkeitsdiagramme und deren Auswertung zur Bestimmung einer Hell-Dunkel-Grenze in Form eines Diagramms. Auf der x-Achse sind die Zeilen x einer Spalte der in Form eines Bildes erfassten Helligkeitsdaten in Pixel (px). Auf der linken y-Achse sind für die Kurve 31 die Helligkeit E in Candela (cd) und für die Kurve 32 die 10*logarithmische Helligkeit $logE$ in log(cd) angegeben. Auf der rechten y-Achse sind für die Kurve 33 der 2. Gradient der Helligkeit E in cd/d$^2\beta$ und für die Kurve 34 der Gradient von $logE$ in log(cd)/d$\beta$ angegeben. Die basierend auf dem Minimum der Kurve 34 ermittelte Hell-Dunkel-Grenze ist als Linie 30 gekennzeichnet. Der Erfinder hat herausgefunden, dass die Hell-Dunkel-Grenze 30 auch mit dem Maximum der Kurve 33 korrespondiert. Diese Erkenntnis ermöglicht es, zur Bestimmung der Hell-Dunkel-Grenze den Helligkeitsanstieg im linear skalierten Bereich zu belassen. Als Hell-Dunkel-Grenze kann damit der stärkste positive Extrempunkt der zweiten Ableitung des Helligkeitssignal in der jeweiligen Betrachtungsrichtung definiert werden. Die Figur 6 zeigt die Gegenüberstellung der Methoden nach UN-ECE-R149 und dem auf der vorliegenden Erfindung basierenden Kriterium. Es ist ersichtlich, dass die stärkste Krümmung von E, was der Extrempunkt der zweiten Ableitung repräsentiert, vergleichbar mit dem Extrempunkt der ersten Ableitung der logarithmischen Helligkeit $log(E)$ ist. Je nach Betrachtungsrichtung im Bild (von oben nach unten oder von unten nach oben) wechselt die Art des zu bestimmenden Extrempunktes (Maximum oder Minimum). Durch den Wechsel in den linearen Bereich zur Berechnung der Position der Hell-Dunkel-Grenze führt ein beliebiger weitestgehend homogener Umgebungslichteintrag zu keiner Veränderung der Ableitungen. Somit bleibt das Kriterium ohne zusätzliche Sensorik und Notwendigkeit der Kompensation stabil.

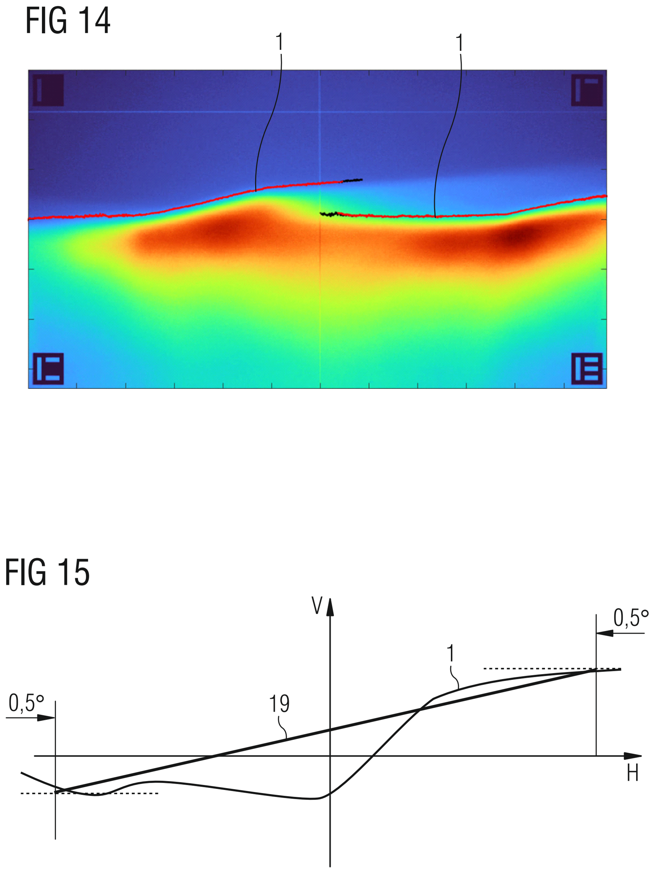

Die Figur 7 zeigt schematisch ein erfindungsgemäßes Verfahren zur Bestimmung des Knickpunktes anhand eines HH-VV-Diagramms. Die Bestimmung des Knickpunktes basiert auf einem iterativen Verfahren mit einem Anfangswertproblem. Da die Methode von einem Anwender unabhängig sein soll, darf nicht auf die korrekte Einrichtung des Scheinwerfers 11 oder des Fahrzeuges 10 vor dem Prüfschirm 12 vertraut werden. Zunächst erfolgt die Erläuterung der Definition zur Bestimmung des Knickpunkt auf Basis des gelösten Anfangswertproblems. Die Lösung des Anfangswertproblems wird unten anhand der Figuren 15 bis 17 beschrieben. Die Figur 7 zeigt die Vorschrift zur Bestimmung des Knickpunktes.

Die Norm UN-ECE-R149 gibt an, dass die Scheinwerfer in einem Bereich von $\pm 5°$ links und rechts der VV-Linie zu beurteilen sind. Diese Grenze dient als Ausgangspunkt, um die Ausdehnung des Betrachtungsbereichs zwischen 5° links der VV-Linie und der VV-Linie selbst festzulegen. Eine Betrachtung bis zur Definitionsgrenze hin ist mit Unsicherheiten in den Randbereichen verbunden. Dabei sind explizit der linke und rechte Randbereich genannt. Aus diesem Grund ist die Verkürzung des Bereichs durch eine Toleranzmarge sinnvoll. Eine Reduktion von 0,5° an beiden Rändern ist sinnvoll. Demnach kann der Bereich, der für die Bestimmung der vertikalen Einstellung dienlich ist, auf 4,5° bis 0,5° links der VV-Linie definiert werden. Dieser Bereich ist in der Figur 7 mit der Bezugsziffer 16 gekennzeichnet. Eine Anpassung der Toleranzmarge ist jederzeit möglich. Die Bestimmung des Einstellwerts erfolgt vorzugsweise durch eine Approximation mit einer Gerade 17 (erste Gerade) an die Datenpunkte im Bestimmungsbereich 16. Dies empfindet den Verlauf der HDG am geeignetsten nach und ergibt später einen genaueren Knickpunkt. Ebenso ist eine Median- oder Mittelwertbildung im Bereich denkbar.

Die Bestimmung der horizontalen Einstellung des Scheinwerfers 11 ist bislang die größere Herausforderung bei der Auswertung des Lichtbilds und der HDG. Die Bestimmung des ansteigenden Teils der HDG erfolgt durch die Abtastung von drei horizontalen Linien 35, 36 und 36. Dabei entspricht die untere Linie 35 der Linie 0,2° D und die obere Line 36 der vertikalen Lage des BR-Punktes 1,0° U. Der BR-Punkt kennzeichnet einen vorgegebenen oberen Referenzpunkt zur Einstellung der HDG. Die dritte Linie 37 befindet sich in der Mitte zwischen den beiden Äußeren bei der Position 0,4° U (0,4° oberhalb der HH-Linie). Im nächsten Schritt erfolgt eine Approximation mit einer Gerade 18 (zweite Gerade) anhand der Schnittpunkte zwischen den drei horizontalen Linien 35, 36 und 37 und der HDG 1. Alternativ oder zusätzlich kann die Approximation auch in einem Bereich zwischen einer oberen und einer unteren Begrenzung erfolgen, wobei die obere Linie die obere Begrenzung und die untere Linie die untere Begrenzung festlegen können. Die approximierte Gerade 18 bildet den ansteigenden Teil der HDG 1 durch eine Annäherung ab. Mit den bestimmten, z. B. berechneten, Geraden 17 und 18 ist eine Konstruktion des Knickpunktes möglich. Der Knickpunkt wird definiert als Schnittpunkt zwischen der Gerade 17 des horizontalen Teils und der approximierten Gerade 18 durch die Punkte der drei horizontalen Linien auf der HDG 1. Dabei ist es nicht zwingend notwendig, dass der Knickpunkt einen Punkt auf der HDG 1 einnimmt. Ziel bei der Einstellung der Scheinwerfer ist es, den Zielkonflikt zwischen ausreichender Ausleuchtung des Umfelds bei gleichzeitig geringstmöglicher Blendung zu lösen. Die approximierten Geraden 17 und 18 vom horizontalen und ansteigenden Teil der HDG 1 idealisieren den Verlauf der HDG 1 und bilden damit die für Blendung relevanten Charakteristika, also die Lage des horizontalen und des ansteigenden Teils der HDG, ab. Die Einstellung anhand des konstruierten Knickpunkts ermöglicht aus Sicht des Erfinders eine Auflösung des Zielkonflikts. Es erfolgt eine Einstellung auf für die Blendung relevante Bestandteile der HDG, wobei etwaige Randeffekte, wie beispielsweise ein unscharfer Knickpunkt, weniger stark im Ergebnis gewichtet werden. Darüber hinaus weist diese Methode einen weiteren Vorteil auf: Die horizontale Abtastung der HDG ist gegenüber der vertikalen Abtastung unabhängig vom Anstiegswinkel zwischen horizontalem und ansteigendem Teil der HDG. Bei großen Anstiegswinkeln besteht nicht die Gefahr, dass eine Abtastgerade nicht mehr im ansteigenden Teil liegt.

Die Figur 8 zeigt schematisch eine Falschfarbendarstellung eines Scheinwerferlichtbildes. Die erhoben Eingangsgrößen für die Berechnung der Hell-Dunkel-Grenze können verschiedene Ursprünge haben: ein durch ein Luxmeter abgetastetes Bild (wie in der Homologation beschrieben), das Leuchtdichtebild einer Leuchtdichtekamera, ein Graustufenbild von einer Monochromkamera oder die berechnete Y-Helligkeit einer chromatischen Kamera. Die Eingangsgrößen sind vorzugsweise zwischen 0 und 1 zu normieren. Die Darstellung der Bildhelligkeit kann mithilfe einer Falschfarbendarstellung erfolgen, indem die Helligkeit, mit der am rechten Bildrand dargestellten Farbskala, verlaufen. Es erfolgt eine spaltenweise Betrachtung der Daten. Die Abtastrichtung ist von unteren zum oberen Bildrand.

Auf Basis dieser Daten existieren zwei mögliche Wege der Prozessierung. Zum einen kann die HDG mit klassischer Bildfilterung und anschließender Ableitung berechnet werden. Zum anderen ist eine Approximation eines Polynoms n-ten Grades mit anschließender analytischer Ableitung möglich.

Im Folgenden wird zunächst eine Bestimmung der HDG mittels Approximation eines Polynoms n-ten Grades beschrieben. Dazu erfolgt Für jede Zeile des Bilds erfolgt folgende Prozessierung: 1. Bestimmung des Bereichs zum Polynomfit, 2. Bestimmung des Polynomgrades, 3. Polynomfit, 4. analytische Ableitung der Koeffizienten des Polynoms und 5. Bestimmung der Hell-Dunkel-Grenzen.

Zur Bestimmung des Bereichs zum Polynomfit erfolgt die Bereichseingrenzung unter Zuhilfenahme einer Hilfsgerade. Die Figur 9 zeigt schematisch eine normierte Helligkeitsdatenkurve 38 mit einer Hilfsgerade 39. Auf der x-Achse sind die Zeilen einer Spalte in px aufgetragen und auf der y-Achse die auf 1 normierte Helligkeit Y eines XYZ-Farbraums. Die Konstruktion dieser Hilfsgerade 39 erfolgt anhand des im Bild dargestellten richtungsabhängen Beispiels. Zur Analyse des Lichtintensitätsverlaufs bzw. der Helligkeitsdatenkurve 38 werden zunächst zwei Referenzpunkte ermittelt: Der Stützpunkt wird durch die Bestimmung des Maximums des Helligkeitsverlaufs 38 definiert, während der Fußpunkt durch die Mittelung der letzten zehn Werte der Lichtintensität berechnet wird. Diese Mittelung gewährleistet eine stabile Grundlinie, die das Ende des Helligkeitsabfalls repräsentiert. Zwischen diesen beiden Punkten wird eine lineare Hilfsgerade 39 generiert, die in der Figur 9 als gestrichelte Linie dargestellt ist.

Anschließend erfolgt die Berechnung eines senkrechten Abstandes der Punkte der Kurve 38 von der Hilfsgerade 39 oder mit anderen Worten eines Residuums, das als Differenz zwischen der Hilfsgerade 39 und dem tatsächlichen Helligkeitsverlauf 38 definiert ist. Das Maximum des Residuums auf der rechten Seite der Maximalhelligkeit markiert den Fußpunkt des Helligkeitsanstiegs. Dieser entspricht dem Punkt mit dem größten Abstand zwischen der Hilfsgerade 39 und dem Kurvenverlauf 38. In der Figur 9 wird dieser Abstand 40 als strichpunktierte Linie visualisiert.

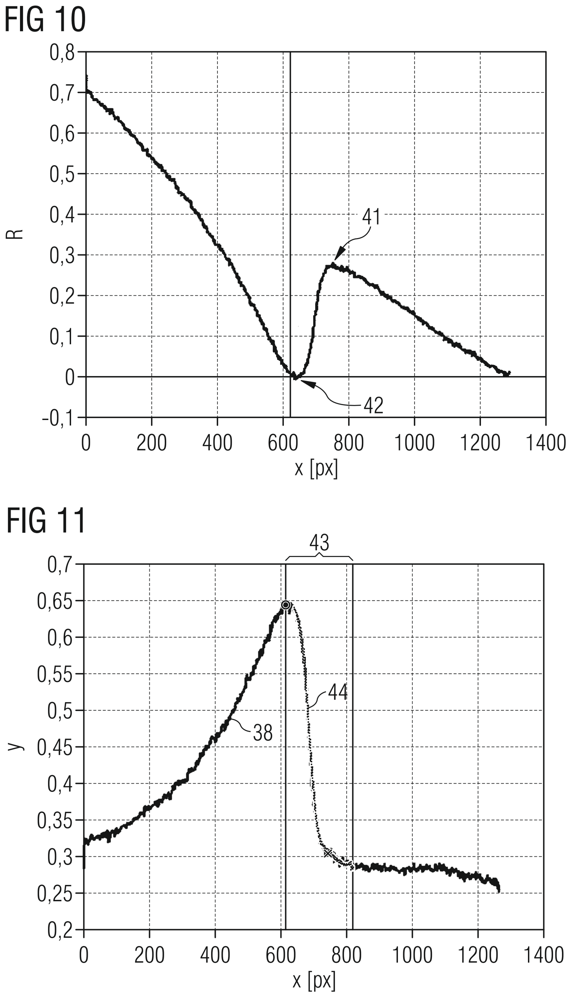

Im nächsten Schritt wird iterativ geprüft, ob rechtsseitig des Residuums-Nulldurchgangs ein lokales Minimum existiert. Dies ist in der Figur 10 gezeigt, die den senkrechten Abstand bzw. das Residuum R der Datenpunkte in der in Figur 9 gezeigten Helligkeitsdatenkurve 38 zu der Hilfsgerade 39 abbildet. Falls rechtsseitig des Residuums-Nulldurchgangs ein lokales Minimum existiert, wird dieser Punkt als neuer Stützpunkt 42 für die Hilfsgerade 39 ausgewählt. Der Fußpunkt ist mit der Bezugsziffer 41 gekennzeichnet. Dieser iterative Prozess ermöglicht eine schrittweise Identifikation des vorderen Scheitelpunkts des Helligkeitsanstiegs. Durch die Wiederholung des Verfahrens mit angepasstem Stützpunkt lässt sich insbesondere der Beginn von plateauförmigen Helligkeitsverläufen (z. B. bei Scheinwerfern oder Leuchten mit flachem Maximalbereich) präzise erfassen. Das Verfahren kombiniert somit die Analyse von Extremwerten, linearen Referenzen und Residuen, um robuste Kennpunkte des Lichtintensitätsverlaufs zu extrahieren und komplexe Kurvenformen zuverlässig zu charakterisieren.

Um das stabile Einschwingen des Polynomfits zu gewährleisten, ist ein definierter Backlash erforderlich. Dieser beschreibt das Zurückgehen auf der Messdaten-Linie. Für die Berechnung des Backlashs stehen zwei Ansätze zur Verfügung. In einem ersten Ansatz erfolgt eine empirische Bestimmung über die Anordnung des Messaufbaus. Der Abstand zwischen Lichtquelle bzw. Scheinwerfer 11 und Projektionsschirm 12 kann genutzt werden, um einen empirischen Wert für den Backlash festzulegen. Dieser Wert ist beschrieben durch die Gleichung:

$$\frac{\tan(1°) * Abstand(mm)}{Auflösung\ der\ Kamera\ (\frac{mm}{px})}$$

In einem zweiten Ansatz erfolgt eine datenbasierte Berechnung aus dem Helligkeitsverlauf. In dieser Alternative lässt sich der Backlash direkt aus der vorliegenden Datenreihe ableiten. Dazu wird der Abstand zwischen iterativ berechnetem Fußpunkt und Stützpunkt auf der x-Achse (z. B. Positionswerte) berechnet. Der Backlash entspricht hierbei der Hälfte dieser Distanz (0,5-facher Abstand). Beide Verfahren liefern nicht das identische Ergebnis, aber einen ausreichend dimensionierten Backlash, um das Einschwingen des Polynoms zu gewährlisten. Die Größe des Backlash hat direkten Einfluss auf die Berechnung des notwendigen Polynomgrades.

Der Polynomgrad wird anhand der dominanten Frequenzkomponente $f_{eff}$ des Signals berechnet, die über eine FFT-Analyse bestimmt wird. Dabei ist das Signal der Teil des Lichtintensitätsanstieg zwischen dem zuvor berechneten Stütz- und Fußpunkt zuzüglich des Backlashs. Dabei werden alle Frequenzanteile berücksichtigt, deren Amplitude mindestens 3 % des Maximums nach Durchlaufen des Frequenzmaximums beträgt, um das effektive Frequenzband zu bestimmen. Der Polynomgrad (p) ergibt sich aus dem Doppelten der effektiven Frequenz ($f_{eff}$) multipliziert mit der Signallänge minus eins, plus eins, aufgerundet auf die nächste ganze Zahl und anschließend nochmals um eins erhöht (

$$\left[2f_{eff}(N-1)+1\right]+1$$).

Es folgt anschließend im ausgewählten Bereich zwischen Fußpunkt und Ende des Backlashs eine Polynom-Regression nach bekannten Regeln der Technik mit dem zuvor bestimmten Polynomgrad. Das Ergebnis zeigt folgendes Beispiel. Die Figur 11 zeigt schematisch die Helligkeitsdatenkurve der Fig. 9, welche in einem Teilbereich 43 durch ein Polynom 44 approximiert ist. Im in der Figur 11 gezeigten Beispiel ist der Polynomgrad p=11.

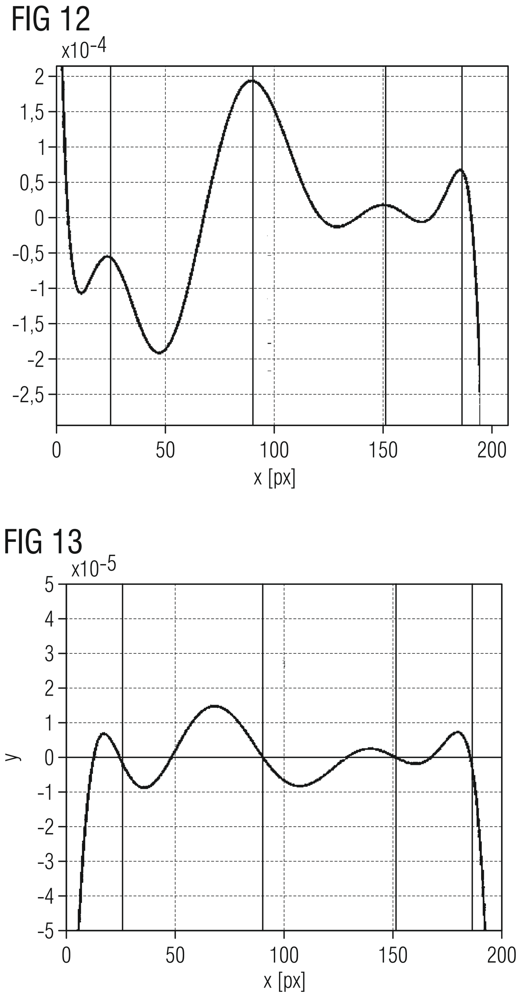

Zur präzisen Analyse des Helligkeitsverlaufs erfolgt eine dreifache Ableitung des gefitteten Polynoms 44. Die Figur 12 zeigt schematisch die 2. Ableitung des in Figur 11 gezeigten Polynoms 44. Die Figur 13 zeigt schematisch die 3. Ableitung des in Figur 11 gezeigten Polynoms 44. Die zweite Ableitung dient dabei der Identifikation des lokalen Maximums (siehe Figur 12), das als zentrales Kriterium für den Scheitelpunkt des Helligkeitsanstiegs fungiert. In diesem Bereich zeigt die zweite Ableitung einen charakteristischen Verlauf, der die Krümmung der Datenlinie beschreibt und somit das hinreichende Kriterium für ein Maximum liefert (Krümmung nach unten, also negative Werte der zweiten Ableitung). Die dritte Ableitung (siehe Figur 13) wird hingegen genutzt, um das notwendige Kriterium für einen Extrempunkt zu prüfen: einen Nulldurchgang. Dieser markiert den Übergang zwischen lokalem Maximum und Minimum in der dritten Ableitung und ist ein Indikator für die Stabilität des Extremums. Auf eine Berechnung der vierten Ableitung kann verzichtet werden, da ausschließlich jene Nulldurchgänge berücksichtigt werden, die innerhalb des Intervalls zwischen lokalem Maximum und Minimum der dritten Ableitung liegen. Dadurch ist sichergestellt, dass das hinreichende Kriterium für ein Maximum bereits durch die negative Krümmung in der zweiten Ableitung erfüllt ist.

Als finaler Schritt wird geprüft, ob die identifizierten lokalen Maxima mindestens einen vorgegebenen Anteil, z. B. 30%, der Höhe des stärksten Peaks erreichen. Erfüllen sie dieses Kriterium, werden sie als Hell-Dunkel-Grenze klassifiziert. Hier können auch mehrere Hell-Dunkel-Grenzen Kandidaten bestimmt werden. Dies ist besonders nützlich, wenn zwei Scheinwerferlichtbilder ineinander scheinen. Das Ergebnis ist in Figur 14 dargestellt, welche schematisch die in der Figur 8 gezeigte Falschfarbendarstellung eines Scheinwerferlichtbildes mit zwei erfindungsgemäß ermittelten Hell-Dunkel-Grenzen 1 zeigt. Die roten Punkte der Kurven 1 in der Falschfarbendarstellung zeigen den stärksten Peak der Maxima (siehe Figur 12). Die schwarzen Punkte der Kurven 1 stellen die anderen möglichen Hell-Dunkel-Grenz-Punkte dar. Es ist auch deutlich sichtbar, dass das Ineinander-Scheinen der Lichtbilder korrekt erkannt wird.

Ein alternativer Weg zur Filterung und Bestimmung der Hell-Dunkel-Grenze ist die klassische Filterung nach erfolgter Signalanalyse. Im Rahmen der vorliegenden Erfindung kann ein Verfahren zur Filterung von Bilddaten unter Verwendung einer automatisierten Frequenzganganalyse genutzt werden, die auf der diskreten Fourier-Transformation (FFT) der Bildspalten basiert, alternativ von der Anwendung eines Chebyshev-Typ-II-Tiefpassfilters. Das Verfahren ist insbesondere dafür geeignet, Hochfrequenzrauschen in Bilddaten effizient zu reduzieren, wobei die Filterparameter adaptiv an die spektralen Eigenschaften des Eingangsbildes angepasst werden.

Das Verfahren beginnt mit der Verarbeitung des Eingangsbildes, das als zweidimensionales Grauwertbild oder als einzelner Farbkanal bereitgestellt wird. Die Parameter maximaler Passband-Ripple sind mit 0,1 dB und minimale Stoppband-Dämpfung ist mit 60 dB gewählt. Um Randeffekte zu minimieren, wird zunächst ein zentraler Bereich des Bildes ausgewählt. Typischerweise werden 3% des Randbereiches ignoriert. Anschließend wird für jede Spalte des extrahierten Bereichs der Mittelwert subtrahiert. Ein Hamming-Fenster wird angewendet, um Spektralverfälschungen (Leakage-Effekte) während der nachfolgenden FFT zu reduzieren.

Im nächsten Schritt wird die diskrete Fourier-Transformation spaltenweise durchgeführt, um das Frequenzspektrum zu berechnen. Aus dem Betragsquadrat der FFT ergibt sich das einseitige Leistungsdichtespektrum, wobei die Frequenzbänder je nach gerader oder ungerader Zeilenanzahl korrigiert werden, um das zweiseitige Spektrum in ein einseitiges umzuwandeln. Das robuste mittlere Leistungsdichtespektrum wird durch Bildung des Medians über alle Spalten berechnet, um Ausreißer zu unterdrücken.

Zur robusten Bestimmung der Passband-Frequenz wird zunächst die erste Nullstelle des geglätteten Gradienten des Leistungsdichtespektrums nach dem lokalen Minimum identifiziert, um den Übergang vom Frequenzabfall in den Rauschbereich einzugrenzen. In diesem Bereich wird der Mittelwert und die Standardabweichung des Gradienten berechnet, um das Rauschverhalten zu charakterisieren und eine dynamische Schwellwertdefinition für den Passband-Übergangspunkt zu ermöglichen. Der Übergangspunkt wird gesetzt, sobald der Gradient diesen Schwellwert - abgeleitet aus dem Mittelwert und dreifacher Standardabweichung - überschreitet, wobei ein Minimalwert von 5 exp-5 Sicherheit gegen zu geringe Schwellwerte gewährleistet. Falls der Gradient im kritischen Bereich stark schwankt, erfolgt eine Korrektur durch Vorverlegung des Übergangspunkts vor die Nullstelle, basierend auf der Steigung drei Punkte davor. Die so ermittelte Frequenz wird normiert und als Passband-Kantenfrequenz verwendet, während die Stoppband-Frequenz als Vierfaches davon definiert wird, um eine klare Frequenztrennung zu gewährleisten.

Basierend auf den berechneten Grenzfrequenzen für Passband und Stoppband sowie den Vorgaben zum maximalen Passband-Ripple und der minimalen Stoppband-Dämpfung wird die erforderliche Filterordnung und die zugehörige Grenzfrequenz mithilfe etablierter Algorithmen zur Dimensionierung von Tiefpässen bestimmt. Anschließend wird ein Chebyshev-Typ-2-Tiefpassfilter entworfen, das die spektralen Anforderungen erfüllt. Dieser Filter wird spaltenweise auf das ursprüngliche Bild angewendet, wobei eine phasenlineare Filterung zum Einsatz kommt, um Verzerrungen in den Bildkonturen zu vermeiden. Das Ergebnis ist ein gefiltertes Bild, bei dem hochfrequentes Rauschen effektiv reduziert wurde, während die strukturellen Bildinhalte erhalten bleiben.

Die Identifizierung von Hell-Dunkel-Grenzen und deren Kandidaten erfolgt analog zu den oben beschriebenen Methoden. Der entscheidende Unterschied besteht jedoch darin, dass anstelle des approximierten Polynoms das durch einen Chebyshev-Type-2-Filter vorverarbeitete Bild als Eingabedatengrundlage dient. Dabei wird die im Alternativverfahren verwendete Bereichseingrenzung ohne Backlash-Korrekturschritt verwendet. Die Ergebnisse zeigen, abgesehen von Randeffekten, eine vergleichbare Genauigkeit.

Im Folgenden werden Prozessschritte zur Bestimmung eines Knickpunktes beschrieben. Da eine Überführung des Algorithmus in ein automatisches Computerprogramm angestrebt ist, muss das Anfangsproblem der VV-Lage gelöst werden. Per Definition liegt der Knickpunkt bei korrekter Einstellung auf der VV-Linie. Somit ist zunächst eine Vorausbestimmung, eine Prädiktion, des Knickpunkts notwendig. Gegeben ist ausschließlich die definierte, aber dennoch mannigfaltige Form der HDG. Sie besteht aus einem horizontalen Teil links und einem ansteigenden Teil rechts der VV-Linie. Dabei kann der ansteigende Teil einen gleichmäßigen geraden Verlauf annehmen oder wieder zu einer Horizontalen abknicken. Zur Bestimmung des prädiktierten Knicks erfolgt eine Konstruktion einer Hilfsgeraden.

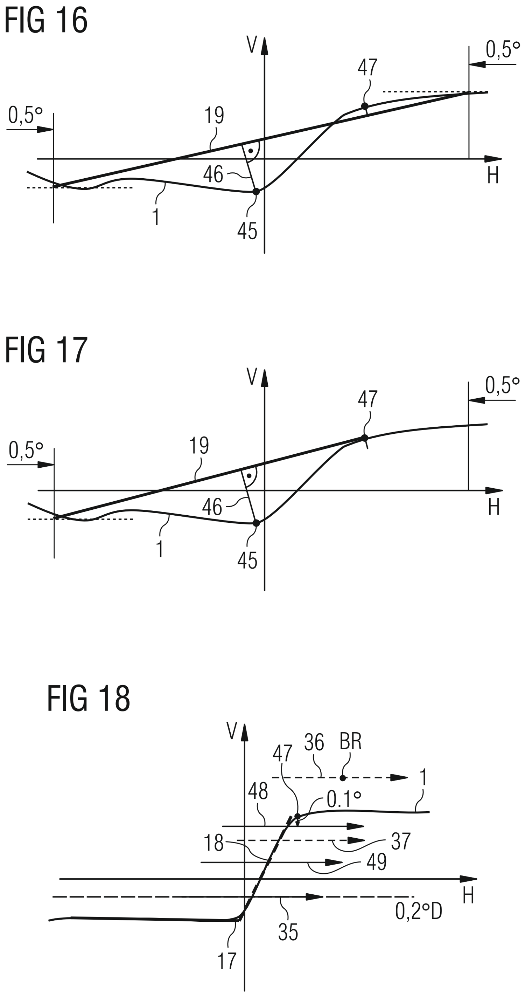

Die Figur 15 zeigt schematisch die Konstruktion einer Hilfsgerade 19 auf einer Hell-Dunkel-Grenze 1 in einem HH-VV-Diagramm. Die untere Stützstelle ist definiert durch den mittleren Minimumwert der verfügbaren HDG-Punkte und der Lage am linken Bildrand. Dafür erfolgt eine aufsteigende Sortierung der HDG-Punkt-Positionen und eine Mittelwertbildung der ersten n Werte. Die Anzahl n ist bestimmt durch die Auflösung des Messsystems und korrespondiert zu der Anzahl der HDG-Punkte die der Länge von 1° entsprechen. Diese Methode liefert eine robustere vertikale Position der unteren Stützstelle. Die horizontale Position der unteren Stützstelle ist als linker Rand der Datenlinie definiert. Der Abzug einer Toleranz von 0,5° vermeidet unscharfe Randeffekte der HDG 1. Die obere Stützstelle ist definiert durch das globale Maximum der vertikalen HDG-Punkt-Positionen und dem rechten Datenrand. Hier erfolgt ebenfalls ein horizontaler Toleranzabzug von 0,5° zur Vermeidung von Randeffekten. Beide Stützstellen sind konstruiert und müssen keine Lage auf der Hell-Dunkel-Grenze 1 einnehmen. Anhand der Stützstellen erfolgt die Konstruktion der Hilfsgeraden 19. Von dieser aus, findet eine Subtraktion der HDG 1 von der Hilfsgerade 19 senkrecht zur Hilfsgerade 19 statt und ergibt das Residuum bzw. den Abstand als Ergebnis. Bei der Auswertung der Residuen wird das Maximum gesucht, welches dem größten Abstand zwischen der HDG 1 und der Hilfsgerade 19 entspricht. Der prädiktierte Knickpunkt 45 ist der Schnittpunkt der Gerade 46, die senkrecht zur Hilfsgerade 19 verläuft, mit der HDG 1 (siehe Figur 16).

Die Figur 16 zeigt schematisch die Bestimmung eines prädiktierten Knickpunktes 45 und einer oberen Stützstelle 47 auf einer Hell-Dunkel-Grenze 1 in einem HH-VV-Diagramm. Für den Fall, dass die HDG 1 nach dem ansteigenden Teil (Schulterteil nach ECE-R149) wieder in die Horizontale abknickt, ist bei einer weiteren Überprüfung eine verbesserte Vorhersage möglich. Das Minimum im Residuum bzw. Abstand stellt bei gleicher Auswertemethode wie beim Maximum den Schulterpunkt (top edge) der HDG 1 dar. Der neue obere Stützpunkt 47 der Hilfsgeraden 19 ist der Schulterpunkt der HDG 1. Die Figur 17 zeigt schematisch eine Aktualisierung des in der Figur 16 gezeigten prädiktierten Knickpunktes in einem HH-VV-Diagramm. Das führt zu einem steileren Anstieg der Hilfsgerade 19 und damit zur genaueren Prädiktion des Knicks. Ein iterativer Prozess führt zur Konvergenz des prädiktierten Knickpunkts. Ist diese erreicht, ist der optimale prädiktierte Knick und der mögliche Schulterpunkt der HDG 1 des Scheinwerfers bestimmt. Bei HDGs, die einen gleichmäßigen ansteigenden Teil, ohne Abknicken zur Horizontalen besitzen, entspricht der Schulterpunkt der ursprünglichen oberen Stützstelle.

Auf Basis dieses prädiktierten Knickpunktes 45 erfolgt die Berechnung des Knickpunktes nach der obigen Beschreibung. Dabei liegt der prädiktierte Knickpunkt 45 auf der nicht vorhandenen Linie VV und das Anfangswertproblem ist betrachterunabhängig gelöst. Es folgt eine iterative Berechnung des tatsächlichen Knickpunktes, indem das Ergebnis der Knickpunktberechnung als neue VV-Linie verwendet wird. Der korrekte Knickpunkt ist jener bei dem Anfangs- und Endwert der Iterationsschleife mit einer definierten Unsicherheit übereinstimmt. Im konkreten Anwendungsfall ist die dreifache Auflösungsgrenze des Systems als Schwellwert definiert. Dieser Wert kann je nach System abgestimmt werden.

Bei einigen Scheinwerfern ist der Schulterteil der HDG nicht stark ausgeprägt. Das kann bei der beschriebenen Methode zur Knickpunktbestimmung zu einer unplausiblen Bestimmung führen. Dabei liegt die obere oder die zwei oberen Abtastlinien 36, 37 nicht mehr innerhalb des vom Lichtbild eingeschlossenen Bereichs. Zur Lösung des Problems wird die Verwendung des Schulterpunkts als Skalierungspunkt genutzt. Die untere Abtastungslinie 35, die der Linie 0,2° D entspricht, bleibt starr und dient ebenfalls als Skalierungspunkt. Bei einigen Fällen kann es dazu kommen, dass zwischen Schulterpunkt und Abtastungslinie 35 ein zu geringer Bereich zur Skalierung übrig bleibt. Dann werden alle drei Geraden zwischen einer bestimmten horizontalen Regression und dem Schulterpunkt skaliert. Die mittlere oder dritte Abtastungslinie 49 liegt nach der Skalierung definitionsgemäß mittig zwischen oberer 48 und unterer 35 Abtastungslinie. Es folgt eine Skalierung der oberen beiden Abtastungslinien 48, 49 in dem Verhältnis, dass die obere Abtastungslinie 48 0,1° unterhalb des Schulterpunktes liegt. Die gewählte vertikale Toleranz von 0,1° soll sicherstellen, dass die obere Abtastungslinie 48 nicht im Krümmungsbereich der HDG 1 liegt und somit zuverlässig zur Approximation des ansteigenden Teils beiträgt. Die Figur 18 zeigt die zuvor beschriebene Skalierung der Abtastung eines ansteigenden Teils der Hell-Dunkel-Grenze in einem HH-VV-Diagramm. Zusätzlich zur Skalierung ist es möglich, zur Verbesserung der Annäherung der Gerade 18 den gesamten Bereich zwischen oberer und unterer Abtastlinie zur Approximation zu verwenden.

Der Einsatzbereich der Erfindung lässt sich z. B. in zwei Anwendungsfelder unterteilen. Im ersten Anwendungsfall kann die Erfindung zur Überprüfung der Scheinwerfereinstellung genutzt werden. Dies geschieht im hoheitlichen Bereich primär in der periodischen technischen Untersuchung, der sog. Hauptuntersuchung. Hier kann mit der neuen, vereinfachten Messeinrichtung die Scheinwerfereinstellung durch die Möglichkeit beide Scheinwerferseiten zeitgleich zu messen mit einem großen Effizienzgewinn von ca. 60% durchgeführt werden. Der zweite Anwendungsfall der Erfindung beschreibt konkret die Einstellung der Scheinwerfer auf das korrekte Einstellmaß. Dabei sind u. a. folgende Szenarien denkbar: Initialeinstellung der Scheinwerfer direkt nach der Produktion, bei der regelmäßigen Wartung des Fahrzeugs im Rahmen des Services, bei der Instandsetzung in der Werkstatt und bei Lichttests.

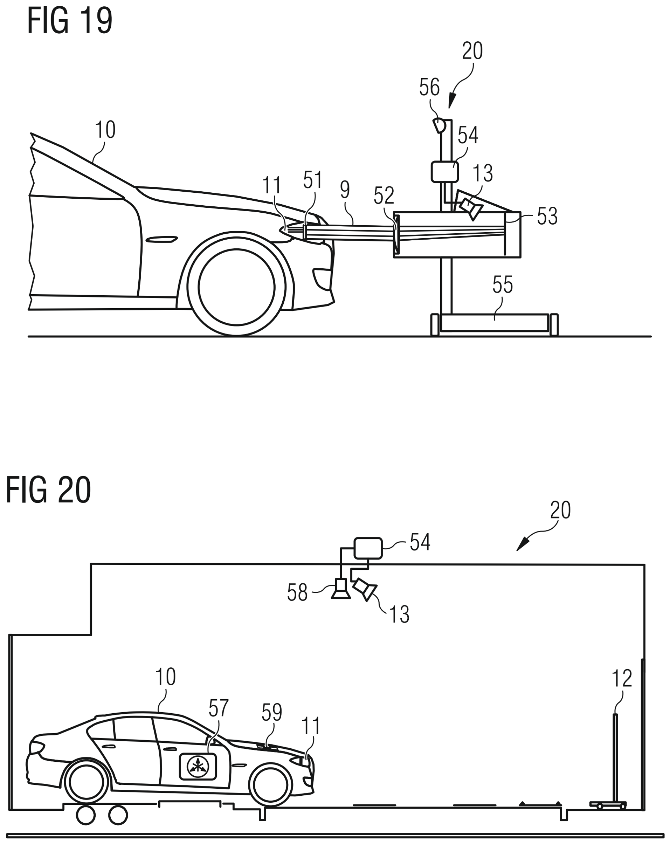

Die beschriebene Erfindung kann in bestehende Systeme, wie dem Scheinwerfereinstell- und Prüfgerät integriert werden. Die Integration führt dazu, dass die Komplexität und die notwendigen Randbedingungen erheblich reduziert werden. Die Figur 19 zeigt schematisch eine erfindungsgemäße Vorrichtung 20 zur Überprüfung der Einstellung eines Fahrzeugscheinwerfers 11. Die Lichtaustrittsebene ist mit der Bezugsziffer 51 gekennzeichnet. Bei der gezeigten Vorrichtung 20 ist eine Fresnellinse 52 zur Anordnung im Strahlengang zwischen der Lichtaustrittsebene 51 und einem in einem Kasten 50 angeordneten Projektionsschirm 53 vorgesehen und vorzugsweise Bestandteil des Kastens 50. Mittels einer in dem Kasten 50 angeordneten Kamera 13 wird die Projektion des Lichtkegels 9 auf den Projektionsschirm 53 erfasst. Die Kamera 13 ist mit einer Auswertungseinrichtung 54, z. B. einem Computer, zur Datenübertragung verbunden. Der Kasten 50 und optional auch die Auswertungseinrichtung 54 können an einem verfahrbaren Gestell 55 angeordnet sein. Das verfahrbare Gestell 55 kann eine Ausrichtungseinheit 56 aufweisen. Die gezeigte Anordnung, insbesondere die Vorrichtung 20, ist dazu ausgebildet, ein oben beschriebenes erfindungsgemäßes Verfahren auszuführen.

Die Unterschiede der erfindungsgemäß vereinfachten Messvorrichtung in **Fehler! Verweisquelle konnte nicht gefunden werden.9** im Vergleich zu den bisher verfügbaren Systemen besteht in zwei wesentlichen Punkten. Der wichtigste Punkt ist, dass bei der Konstruktion und während der Anwendung der Messvorrichtung nicht auf die Vermeidung von Störlicht geachtet werden muss. Prinzipbedingt sind zwei Störrichtungen des Lichtes möglich. Einerseits kann das Licht seitlich in die Messeinrichtung eindringen und Messunsicherheiten hervorrufen. Bisher wird dies durch eine konstruktive Abschirmung realisiert. Diese ist beim Einsatz der Erfindung nicht mehr notwendig. Andererseits gibt es die gewünschte Lichteinfallrichtung durch die Fresnellinse. Diese fokussiert, neben dem Scheinwerferlichtbild, auch durch die Brennweite der Linse ein Großteil des ungewünschten Umgebungslichtes und das Licht des nicht abschaltbaren Tagfahrlichtes. Für eine korrekte Funktionsweise erfolgt bisher der Einsatz von zusätzlicher und umfangreicher Messsensorik. Mit der Verwendung der Erfindung im bestehenden System fällt zukünftig dieser zusätzliche Aufwand weg und es kann direkt und ohne Kompensation des Umgebungslichtes die Messaufgabe erfüllt werden.

In einer weiteren Ausführungsvariante kann mit einer dynamischen Methode eine Einstellung eines Fahrzeugscheinwerfers überprüft werden. Hierzu zeigt die Figur 20 schematisch eine Vorrichtung 20 oder Anordnung zur dynamischen Überprüfung der Einstellung eines Fahrzeugscheinwerfers 11. Zusätzlich zu den bereits anhand der Figur 3 erläuterten Merkmale weist die Anordnung folgende Merkmale auf. Das gezeigte Fahrzeug 10 umfasst einen mittels einer weiteren Kamera 58 erfassbaren optischen Marker 59 sowie eine IMU in Form eines 6 Achs-Sensors 57 zum Erfassen von Beschleunigungen und/oder Drehraten des Fahrzeugs 10. Die Kameras 13 und 58 sind mit einer Auswertungseinrichtung 54 verbunden.

Zur Bestimmung der Fahrzeugpose misst eine IMU in allen drei Raumrichtung die Beschleunigungen und Drehraten. Zusätzlich erfasst die weitere Kamera 58 den Marker 59, z. B. ein kodiertes Board, welches bei geeigneter in- und extrinsischer Justage, die Lage des Fahrzeugs 10 in Bezug zu den ermittelten Knickpunkten bringen kann. Das Messprinzip beruht auf einer Bewegung des Fahrzeugs 10. Das Fahrzeug 10 nähert sich geradlinig an den Projektionsschirm 12 an. Durch die Einstellung des Scheinwerfers 11 und durch die Fahrzeugaufbaubewegung wird bei der Heranfahrt eine Bewegung des Scheinwerferlichtbilds auf dem Projektionsschirm 12 induziert. Es kann durch die Berechnung der Hell-Dunkel-Grenzen und der Knickpunkte ein Knickpunktverlauf über die Anfahrt bestimmt werden, wie folgende Gleichung zeigt:

$$e_{vertikal} = \frac{\Delta\left(z_{Knick} - z_{Fahrzeugbewegung}\right)}{\Delta x} * 100\%$$

Nach der Herausrechnung der Einflüsse auf den Fahrzeugaufbau kann die Scheinwerfereinstellung über den Anstieg des Knickpunktverlaufs über die Anfahrt für die vertikale und analog dazu in horizontale Richtung bestimmt werden. Der Korrekturwert setzt sich aus der translatorischen und rotatorischen Änderung des Fahrzeugaufbaus zusammen. Die Bestimmung dieser erfolgt absolut durch das Kamerasystem und relativ durch den 6-Achs-IMU. Die beschriebene dynamische Variante ermöglicht ein zeitgleiches Erkennen und Auswerten der beiden Scheinwerferseiten und ist hinsichtlich der erzielten Ergebnisse unabhängig von der Beschaffenheit der Fahrbahn.

Die Erfindung kann neben der Bestimmung der Scheinwerfereinstellung auch zum Prüfen von automatischen Lichtfunktionen verwendet werden. Diese Lichtfunktionen beinhalten das kontrollierte Ändern der Hell-Dunkel-Grenzen Position oder der Form der Hell-Dunkel-Grenze. Bei bekannten Abständen des Fahrzeugs 10 zu dem Projektionsschirm 12 kann durch die Hell-Dunkel-Grenzen Erkennung ohne notwendige Kompensation des Umgebungslicht die gesamte relevante Änderung der Hell-Dunkel-Grenze bewertet werden. Dabei kann pixelgenau verfolgt werden, wie sich die Hell-Dunkel-Grenze bei den einzeln nacheinander durchgeschalteten Lichtfunktionen verändert.

In der Typgenehmigung spielt die Lage der Hell-Dunkelgrenze und des Knickpunkts nur in einigen Sonderfällen eine Rolle. Jedoch kann die Erfindung für einen entscheidenden Effizienzvorteil in der Typgenehmigung genutzt werden. Bislang muss der Scheinwerfer manuell auf dem Goniophotometer ausgerichtet werden. Dies führt dazu, dass bei unzureichender Erstausrichtung der Scheinwerfer nicht besteht und nachjustiert werden muss. Jeder Prozessschritt ist genauso umfangreich wie der erste initiale Schritt. Durch die Anwendung des oben beschriebenen Verfahrens zur Bestimmung der Hell-Dunkel-Grenze und anschließend des Knickpunkts, kann eine anwenderunabhängige initiale Ausrichtung erfolgen. Dies wird erreicht, indem der berechnete Knickpunkt als Ausgangspunkt für die Lage der VV- und HH-Linie genommen wird. Ausgehend von dieser Grundeinstellung kann die gesamte photometrische Messung in einem Einrichtungsschritt erfolgen. Als denkbare Messmittel können beispielsweise eine Leuchtdichtekamera, eine chromatische oder monochrome Kamera mit linear empfindlichem Sensor verwendet werden. Eine Abtastung mit einem fotoempfindlichen Element, wie beispielsweise ein Luxmeter, ist ebenfalls denkbar.

Die Erfindung eignet sich zudem zur Livebewertung der Scheinwerfereinstellung bei im Betrieb befindlichen Fahrzeugen. Beispielsweise kann bei einem Fahrzeug, ausgestattet mit den geeigneten Kameras oder Systemen aus der Fahrerassistenz, die Scheinwerfereinstellung anhand der beschriebenen Erfindung bestimmt werden. Dazu ist zusätzliche Messtechnik notwendig. Die im Fahrzeug verbaute Kamera nimmt die Umgebung auf und liefert das Helligkeitsbild. Zudem können Inertialsensoren in dem Fahrzeug vorhanden sein und im Rahmen der Erfindung verwendet werden. Über die Umfeldsensorik, bspw. Kamera, Lidar, Radar, Ultraschallsensoren, Infrarotsensoren, etc., wird die Umgebung des Fahrzeugs erfasst. Dabei kann die Hell-Dunkel-Grenze der Scheinwerfer in der Umgebung durch die erläuterte Erfindung ohne zusätzliche Kenntnis von den Umgebungseinflüssen bestimmt werden. Bei geeigneter Justage von der Kamera und Sensoren und unter Zuhilfenahme der beschriebenen Knickpunkterkennung ist der Ist-Zustand der Scheinwerfereinstellung ermittelbar. Durch einen rekursiven Algorithmus kann beim im Betrieb befindlichen Fahrzeug die Scheinwerfereinstellung korrigiert werden. Mit erweiterten Objektdaten der Umgebung kann auch bei maskiertem Fernlicht die korrekte Wirkungsweise live im Fahrbetrieb überprüft werden. Ein Abgleich, der aus der Umfeldsensorik stammenden Objektpositionen, kann mithilfe der Hell-Dunkel-Grenzen-Erkennung die tatsächliche Ausleuchtung der Objekte im Umfeld bestimmt werden. Auch so kann eine Dejustage des Scheinwerferlichtbilds bestimmt und korrigiert werden.

Der Einsatz der Erfindung ermöglicht, neben der Reduktion von Randbedingungen und Komplexität des bisherigen Systems, ebenso neue Methoden der Scheinwerfereinstellung, die die Effizienz um ca. 60% steigern können.

Bezugszeichenliste:

1 Hell-Dunkel-Grenze
2 Linie für horizontalen Scan
3 Linie für vertikalen Scan
4 approximierte Gerade
5 Bildaufnahme
6 Bildverarbeitung
7 Auswertung
8 reflektiertes/gestreutes Licht
9 Lichtkegel
10 Kraftfahrzeug
11 Scheinwerfer
12 Projektionsschirm
13 Kamera
14 Umgebungslicht
15 Raumlicht
16 Bestimmungsbereich
17 approximierte Gerade (erste Gerade)
18 approximierte Gerade (zweite Gerade)
19 Hilfsgerade
20 Vorrichtung zur Überprüfung der Einstellung und/oder zum Justieren und/oder Kalibrieren der Einstellung eines Fahrzeugscheinwerfers
21 Objektraum

22 Bildraum
23 Merkmalsraum
24 Ergebnisraum
25 Erfassen eines Bildes einer Projektion des Lichtkegels des Fahrzeugscheinwerfers auf eine Projektionsfläche
26 Ermitteln der Position mindestens eines vorgegebenen, die Einstellung des Fahrzeugscheinwerfers kennzeichnenden Merkmals des Lichtkegels
27 Ermitteln eines Ist-Zustandes der Einstellung des Fahrzeugscheinwerfers 11 durch Vergleichen der Position des mindestens einen kennzeichnenden Merkmals des Lichtkegels 9 mit einer vorgegebenen Referenzposition
30 Hell-Dunkel-Grenze
31 Helligkeit
32 logarithmische Helligkeit
33 2. Gradient der Helligkeit
34 Gradient der 10*logarithmischen Helligkeit
35 untere Linie
36 obere Linie
37 dritte Linie
38 Helligkeitsdatenkurve
39 Hilfsgerade
40 senkrechter Abstand zur Hilfsgerade
41 Fußpunkt
42 Stützpunkt
43 Bereich
44 Polynom
45 prädiktierter Knickpunkt
46 Gerade
47 obere Stützstelle
48 obere Abtastungslinie
49 dritte Abtastungslinie
50 Kasten
51 Lichtaustrittsebene
52 Fresnellinse
53 Projektionsschirm
54 Auswertungseinrichtung
55 verfahrbares Gestell
56 Ausrichtungseinheit
57 IMU / 6 Achs-Sensor
58 Kamera
59 Marker

x Zeilen einer Spalte
Y Helligkeit eines XYZ-Farbraums
E Helligkeit
β Winkelposition

**Patentansprüche**

1. Verfahren zur Überprüfung einer Einstellung eines Fahrzeugscheinwerfers (10), wobei das Verfahren folgende Schritte umfasst:

    - Erfassen eines Bildes (25) einer Projektion eines Lichtkegels (9) des Fahrzeugscheinwerfers (11) auf eine Projektionsfläche (12),
- mittels des erfassten Bildes Ermitteln (26) einer Position mindestens eines vorgegebenen, die Einstellung des Fahrzeugscheinwerfers (11) kennzeichnenden Merkmals des Lichtkegels (9) in dem Bild basierend auf einem Bestimmen eines Maximums eines senkrechten Abstandes (40, 46) einer auf vorgegebene Weise festgelegten Referenzgeraden (19, 39) zu einer Helligkeitsdatenkurve (1, 38),
- Ermitteln eines Ist-Zustandes der Einstellung des Fahrzeugscheinwerfers (11) durch Vergleichen der Position des mindestens einen kennzeichnenden Merkmals des Lichtkegels (9) mit einer vorgegebenen Referenzposition (27).

2. Verfahren nach Anspruch 1,
**dadurch gekennzeichnet, dass**
als kennzeichnendes Merkmal eine Hell-Dunkel-Grenze (1) und/oder mindestens ein Knickpunkt bestimmt wird.

3. Verfahren nach Anspruch 1 oder 2,
**dadurch gekennzeichnet, dass**
Helligkeitsdatenkurven (38) verwendet werden, welche bezüglich der Position und der Helligkeit linear skaliert sind.

4. Verfahren nach einem der Ansprüche 1 bis 3,
**dadurch gekennzeichnet, dass**

die zweite Ableitung mindestens einer Helligkeitsdatenkurve (38) gebildet wird und
eine Hell-Dunkel-Grenze (1) in der Helligkeitsdatenkurve mittels eines globalen Maximums der zweiten Ableitung bestimmt wird.

5. Verfahren nach Anspruch 4,
**dadurch gekennzeichnet, dass**
eine erste Hell-Dunkel-Grenze (1) an der Position des globalen Maximums der zweiten Ableitung ermittelt wird und mindestens eine weitere Hell-Dunkel-Grenze (1) an der Position eines lokalen Maximums der zweiten Ableitung ermittelt wird, wobei das lokale Maximum mindestens ein vorgegebenes Merkmal in Bezug auf das globale Maximum aufweist.

6. Verfahren nach einem der Ansprüche 1 bis 5,
**dadurch gekennzeichnet, dass**
ein Knickpunkt basierend auf einem Verlauf einer Hell-Dunkel-Grenze (1) in einem HH-VV-Diagramm oder HH-VV-Datensatz ermittelt wird, mit den Schritten

- Approximieren des Verlaufs der Hell-Dunkel-Grenze (1) mittels einer ersten Geraden (17) in einem vorgegebenen Bereich zwischen den Koordinaten 0 Grad links (0°L) und 5 Grad links (5°L) der HH-Achse,
- Auswählen von mindestens drei Punkten des Verlaufs der Hell-Dunkel-Grenze (1), wovon ein erster Punkt eine Koordinate von 0,2 Grad unten (0,2°D) in VV-Richtung aufweist, ein zweiter Punkt eine Koordinate von 1,0 Grad oben (1,0°U) oder 0,1 Grad unterhalb eines Schulterpunktes des Verlaufs der Hell-Dunkel-Grenze (1) in VV-Richtung aufweist und ein dritter Punkt eine Koordinate in VV-Richtung aufweist, welche zwischen den Koordinaten des ersten und des zweiten Punktes in VV-Richtung liegt,
- Approximieren der mindestens drei ausgewählten Punkte mittels einer zweiten Gerade (18), und
- Ermitteln des Knickpunktes als Schnittpunkt der ersten Gerade (17) mit der zweiten Gerade (18).

7. Verfahren nach Anspruch 6,
**dadurch gekennzeichnet, dass**
im Rahmen des Ermittelns des Knickpunktes zur Bestimmung der Lage der VV-Achse der Knickpunkt vorausbestimmt wird und der Knickpunkt basierend auf dem prädiktierten Knickpunkt (45) bestimmt wird, wobei zur Bestimmung des prädiktierten Knickpunktes (45) eine Hilfsgerade (19) zu einem bestimmten Verlauf einer Hell-Dunkel-Grenze (1) konstruiert wird, der Punkt der Hell-Dunkel-Grenze, welcher den maximalen Abstand (46) senkrecht zu der Hilfsgerade (19) von der Hilfsgerade (19) aufweist, ermittelt und als prädiktierter Knickpunkt (45) festgelegt wird.

8. Verfahren nach einem der Ansprüche 1 bis 7,
**dadurch gekennzeichnet, dass**
Eingangsdaten zur Bestimmung des Verlaufs der Hell-Dunkel-Grenze (1) mittels mindestens einem optischen Sensor und/oder einem Lichtmessgerät erfasst werden.

9. Verfahren nach einem der Ansprüche 1 bis 8,
**dadurch gekennzeichnet, dass**
Bilddaten des erfassten Bildes gefiltert werden.

10. Verfahren nach einem der Ansprüche 1 bis 9,
**dadurch gekennzeichnet, dass**
mindestens eine Ableitung einer Helligkeitsdatenkurve (38) numerisch bestimmt wird oder analytisch mittels einer polynomialen Kurvenanpassung (44) der Helligkeitsdaten bestimmt wird.

11. Verfahren nach einem der Ansprüche 1 bis 10,
**dadurch gekennzeichnet, dass**

ein im Rahmen der Bestimmung einer Hell-Dunkel-Grenze (1) in einer Helligkeitsdatenkurve (38) ausschließlich zu berücksichtigender Bereich der Helligkeitsdatenkurve (38) mittels einer Hilfsgerade (39) und eines Maximums eines senkrechten Abstandes (40) der Hilfsgerade (39) von der Helligkeitsdatenkurve (38) iterativ bestimmt wird, und/oder

ein im Rahmen der Bestimmung eines Knickpunktes und/oder eines prädiktierten Knickpunktes (45) in einer Kurve einer Hell-Dunkel-Grenze (1) ausschließlich zu berücksichtigender Bereich der Kurve (1) der Hell-Dunkel-Grenze mittels einer Hilfsgerade (19) und eines Maximums eines Abstandes (46) der Hilfsgerade (19) von der Kurve (1) der Hell-Dunkel-Grenze senkrecht zu der Hilfsgerade (19) von der Hilfsgerade (19) iterativ bestimmt wird.

12. Verfahren nach einem der Ansprüche 1 bis 11, **dadurch gekennzeichnet, dass** das Verfahren zumindest teilweise während einer Bewegung eines den Fahrzeugscheinwerfer (11) umfassenden Fahrzeugs (10) in Richtung der Projektionsfläche (12) durchgeführt wird.

13. Verfahren nach Anspruch 12, **dadurch gekennzeichnet, dass** eine Pose des Fahrzeugs (10) zum Zeitpunkt der Bilderfassung ermittelt wird.

14. Verfahren zum Justieren und/oder Kalibrieren der Einstellung eines Fahrzeugscheinwerfers (11), wobei das Verfahren folgende Schritte umfasst:

- Ermitteln eines Ist-Zustandes der Einstellung des Fahrzeugscheinwerfers (11) mittels eines Verfahrens nach einem der Ansprüche 1 bis 13,
- basierend auf dem ermittelten Ist-Zustand Justieren und/oder Kalibrieren der Einstellung des Fahrzeugscheinwerfers (11) in einen vorgegebenen Soll-Zustand.

15. Vorrichtung (20) zur Überprüfung der Einstellung und/oder zum Justieren und/oder Kalibrieren der Einstellung eines Fahrzeugscheinwerfers (11), umfassend Mittel zur Ausführung eines Verfahrens nach einem der vorstehenden Ansprüche.

16. Computerprogramm, umfassend Befehle, die bei der Ausführung des Programms durch einen Computer diesen veranlassen, ein Verfahren nach einem der Ansprüche 1 bis 14 auszuführen.

17. Computerlesbarer Datenträger, auf dem das Computerprogramm nach Anspruch 16 gespeichert ist oder Datenträgersignal, das das Computerprogramm nach Anspruch 16 überträgt.

# FIG 1

# FIG 2

FIG 3

FIG 4

FIG 5

## FIG 6

Helligkeit E

---- logarithmische Helligkeit logE

—— 2. Gradient von E/d$^2\beta$

– – – Gradient von logE/d$\beta$

## FIG 7

## FIG 8

## FIG 9

FIG 10

FIG 11

FIG 12

FIG 13

FIG 14

FIG 15

FIG 16

FIG 17

FIG 18

FIG 19

FIG 20

**Europäisches Patentamt**
European Patent Office
Office européen des brevets

# EUROPÄISCHER RECHERCHENBERICHT

Nummer der Anmeldung

EP 25 22 2072

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CHAUMONT AYMERIC ET AL: "Beam Recognition for Headlamps Aiming", 2023 IEEE 13TH INTERNATIONAL CONFERENCE ON PATTERN RECOGNITION SYSTEMS (ICPRS) IEEE, 4. Juli 2023 (2023-07-04), Seiten 1-7, XP034379654, DOI: 10.1109/ICPRS58416.2023.10179083 [gefunden am 2023-07-18] * Seiten 1,2 * ----- | 1-17 | INV. G01M11/06 |
| A | DE 10 2010 049047 A1 (HELLA KGAA HUECK & CO [DE]) 19. April 2012 (2012-04-19) * Abbildungen 1,2,4 * ----- | 1-17 | |

|  |  |
|---|---|
|  | RECHERCHIERTE SACHGEBIETE (IPC) |
|  | G01M |

Der vorliegende Recherchenbericht wurde für alle Patentansprüche erstellt

| Recherchenort | Abschlußdatum der Recherche | Prüfer |
|---|---|---|
| Den Haag | 6. Mai 2026 | Kaiser, Jean-Luc |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 22 2072

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2026

| Im Recherchenbericht angeführtes Patentdokument | Datum der Veröffentlichung | Mitglied(er) der Patentfamilie | Datum der Veröffentlichung |
|---|---|---|---|
| DE 102010049047 A1 | 19-04-2012 | DE 102010049047 A1 | 19-04-2012 |
| | | EP 2630463 A1 | 28-08-2013 |
| | | JP 5835595 B2 | 24-12-2015 |
| | | JP 2013545083 A | 19-12-2013 |
| | | US 2013286670 A1 | 31-10-2013 |
| | | US 2016003439 A1 | 07-01-2016 |
| | | WO 2012052187 A1 | 26-04-2012 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1953518 A2
- EP 1953520 B1
- EP 2128589 A1
- DE 102014016174 A1
- DE 102015222393 A1
- DE 102014016116 A1
- DE 102010062770 A1